(19)

Europäisches
Patentamt
European
Patent Office
Office européen
des brevets

(11) **EP 4 397 216 A1**

(12) **EUROPEAN PATENT APPLICATION**
published in accordance with Art. 153(4) EPC

(43) Date of publication:
**10.07.2024 Bulletin 2024/28**

(21) Application number: **22862485.4**

(22) Date of filing: **28.07.2022**

(51) International Patent Classification (IPC):
**A47G 19/22** *(2006.01)*

(52) Cooperative Patent Classification (CPC):
**A47G 19/16; A47G 19/22; A47G 19/2211;**
**A47J 31/0615; A47J 31/20**

(86) International application number:
**PCT/CN2022/000110**

(87) International publication number:
**WO 2023/029334 (09.03.2023 Gazette 2023/10)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **31.08.2021 CN 202111016299**

(71) Applicant: **Lin, Yisheng**
**Guangzhou, Guangdong 510000 (CN)**

(72) Inventor: **Lin, Yisheng**
**Guangzhou, Guangdong 510000 (CN)**

(74) Representative: **Ullrich & Naumann PartG mbB**
**Schneidmühlstrasse 21**
**69115 Heidelberg (DE)**

(54) **MAGNETIC DEVICE**

(57) A magnetic device, comprising a cup body (l), a tea container (2), and a cup cover (3), the cup lid (3) comprises an upper lid (31) and a lower lid (32); the cup cover (3) is provided with a tea container separation mechanism (4); the tea container separation mechanism (4) comprises a force-receiving block (4l) and a separation magnet (42); the separation magnet (42) is installed on the force-receiving block (4l); the force-receiving block (4l) changes the relative position between the separation magnet (42) and the cup cover (3) under force; the inner center of the tea container (2) is provided with a sealed magnetically attractable metal (21); the tea container (2) attracts the magnetically attractable metal (21) to the center of the bottom of the cup cover (3) by means of the separation magnet (42); the separation magnet (42) is kept away from the magnetically attractable metal (2l) by changing the relative position of the force-receiving block (41), and the attraction force of the separation magnet (42) attracting the magnetically attractable metal (21) is less than the gravity of the tea container (2) after being reduced, and the tea container (2) falls to the bottom of the cup body (l) under the action of gravity to start making tea. The magnetic device has a simple structure, is convenient to use, has good stability, can adjust the concentration of tea, and solves the problem that in traditional technology, the concentration of tea cannot be adjusted, and when the cup cover (3) is used in conjunction with the opaque cup body (1), the soaking and attraction states of the tea container (2) cannot be reflected.

FIG. 1

**Description**

**Technical field**

The present invention relates to the technical field of brewing tea, and in particular to a magnetic device.

**State of the art**

As the society continuously develops, more and more people like to brew tea. Brewing tea is beneficial to keep in good health. However, different people have different preferences for tea concentration, and the existing cup cannot make an adjustment for tea concentration. The filter screen is simply put in one of most cups on the market now, and then the tea leaves are placed on the filter screen. The tea concentration cannot be adjusted according to the needs of the user, which is very inconvenient in use.

A Chinese invention patent, with publication Number CN204698258U, discloses a new multifunctional tea-brewing cup, including a cup body and an upper lid, wherein a movable tea box is placed in the cup body, and the upper lid includes a cylindrical lid body, in which an intermediate spacer base is provided. A magnetic attraction mechanism is provided between the intermediate spacer base and the tea box, and the intermediate spacer base is assembled with a tea box push mechanism. After the tea box with tea leaves is placed in the cup body, water is poured into the cup body, and the upper lid is connected to the cup body. When the cup body returns to the upright position after an inversion, the tea box is attracted to the bottom of the intermediate spacer base by the magnetic attraction mechanism so as to get out of the water. When it is necessary to brew tea, the tea box push mechanism is pressed to push the tea box, such that the tea box falls into the water in the cup body. Although the concentration of brewed tea can be adjusted according to this invention patent, the tea strainer made of iron is prone to rust in use. A magnetic attraction mechanism and a push mechanism are both provided at the upper lid, which causes a complex structure. Furthermore, this structure is related to a sealing problem of the push rod. Although an elastic sealing cap is adopted, the process difficulty and production cost are hereby increased, which restricts the market promotion. In the existing technology, when the cup lid is used with an opaque bottle body, the user cannot observe the abstracted or brewing state of the tea leaves strainer, which cannot be observed through the state of the cup lid. This design flaw will affect the user experience.

**Summary**

The purpose of the present application is to provide a magnetic device with simple structure, which is convenient to use, stable, and can adjust the tea concentration. The magnetic device can be used in teacups and other tea-brewing device, which solves the problem that an attracted state of the tea strainer cannot be achieved in another magnetic cup lid.

To solve the above technical problem, the following technical solution is disclosed.

A magnetic device includes a cup body, a tea strainer, and a cup lid sealedly connected to the cup body, the tea strainer is placed inside the cup body when in use, the cup lid includes an upper lid and a lower lid, the upper lid is fixedly covered on the lower lide, in particular, the cup lid is provided with a separation mechanism for tea strainer, the separation mechanism for tea strainer includes a stressed block and a separation magnet mounted on the stressed block, the stressed block is configured to change a relative position between the separation magnet and the cup lid when being stressed, the tea strainer is internally provided with a sealed magnetically attractive metal block at a center, the tea strainer is attracted to a center of a bottom of the cup lid in such a way, that the magnetically attractive metal block is attracted by the separation magnet, the stressed block is stressed when brewing tea, such that the separation magnet is away from the magnetically attractive metal block, after an attraction force to the magnetically attractive metal block by the separation magnet is reduced to be smaller than a gravity of the tea strainer, the tea strainer falls to a bottom of the cup body under the gravity, it is started to brew the tea, and particularly, the cup body is turned over when it is necessary to stop brewing the tea, such that the tea strainer moves to the bottom of the cup lid under the gravity, the stressed block makes the separation magnet move to the bottom of the cup lid due to the gravity, and the tea strainer is attracted to the bottom of the cup lid because the separation magnet attracts the magnetically attractive metal block, so as to separate the tea strainer from the tea water.

Further, the stressed block has a regular geometry with uneven mass distribution, an end of the stressed block with the separation magnet is lighter than an end of the stressed block without the separation magnet, due to the gravity, the end of the stressed block without the separation magnet is below while the end of the stressed block with the separation magnet is above, or an external force is applied to the stressed block, so that the relative position between the separation magnet and the cup lid is changed by the stressed block.

Further, the stressed block is configured to have a lever structure, in particular, a support pillar is provided between the upper lid and the lower lid, the stressed block includes a rotary shaft and a counter weight, the rotary shaft is rotatably mounted on the support pillar, the separation magnet is mounted on one end of the rotary shaft, the counter weight is mounted on the other end of the rotary shaft, the counter weight is heavier than the separation magnet, the upper lid is configured with a through hole, and the counter weight protrudes out of the through hole.

Further, the stressed block is configured to have a rotary structure, the stressed block includes a rotary knob shell and a counter weight, the separation magnet and the counter weight are arranged inside the rotary knob shell respectively at an upper end and a lower end of the rotary knob shell, in particular, the upper lid is matched with the lower lid to form a cavity configured to accommodate the rotary knob shell, the rotary knob shell is rotatably mounted in the cavity, a center of the upper lid is configured with a circular opening or a rectangular opening extending outwards, the upper end of the rotary knob shell protrudes from the circular opening or the rectangular opening.

Further, the stressed block is configured to have a slidable structure, the stressed block includes a push button shell, a sliding frame and a counter weight, the separation magnet and the counter weight are arranged in the push button shell respectively at an uppert end and a lower end of the push button shell, the lower lid is radially symmetrically provided with chutes for accommodating the sliding frame, and a separation groove configured for the push button shell to slide is defined between the chutes.

Further, a sidewall of the rotary knob shell is symmetrically provided with rotary shafts for rotary knob, and the rotary knob shell is rotatably installed in the cavity through the rotary shafts for rotary knob.

Further, a sidewall of the push button shell is symmetrically provided with rotary shafts for push button, the push button shell is rotatably mounted on the sliding frame through the rotary shafts for push button.

Further, the rotary knob shell is a sphere, the counter weight and the separation magnet are respectively installed on the upper end and the lower end of the rotary knob shell, and the counter weight is heavier than the separation magnet.

Further, the rotary knob shell is a sphere, the rotary knob shell includes an upper rotary knob shell and a lower rotary knob shell, the lower rotary knob shell is scarfed in the upper rotary knob shell, the counter weight is installed on a top of the upper rotary knob shell, the separation magnet is installed inside the lower rotary knob shell, and the counter weight is heavier than the separation magnet.

Further, the rotary knob shell is a square cylinder, the rotary knob shell is rotatably installed in the cavity in an axial direction of the square cylinder, the rotary knob shell is hollow, the separation magnet is arranged in the rotary knob shell at an upper end of the rotary knob shell, the counter weight is arranged in the rotary knob shell at a lower end of the rotary knob shell, and the counter weight is heavier than the separation magnet.

Further, the rotary knob shell is a circle cylinder, the rotary knob shell is rotatably installed in the cavity in a radial direction of the circle cylinder, the separation magnet is arranged in the rotary knob shell at an upper end of the rotary knob shell, the counter weight is arranged in the rotary knob shell at a lower end of the rotary knob shell, and the counter weight is heavier than the separation magnet.

Further, the rotary knob shell is a circle cylinder, the rotary knob shell is rotatably installed in the cavity in an axial direction of the circle cylinder, the separation magnet is arranged in the rotrary knob shell at an upper end of the rotary knob shell, the counter weight is arranged in the rotary knob shell at a lower end of the rotary knob shell, and the counter weight is heavier than the separation magnet.

Further, the push button shell is a sphere, the push button shell includes an upper push button shell, an intermediate push button shell and a lower push button shell, the upper push button shell is covered on the intermediate push button shell, the lower push button shell is scarfed in the intermediate push button shell, the counter weight is installed on a top of the intermediate push button shell, the separation magnet is installed inside the lower push button shell, the lower lid is recessed downwards to form a separation groove configured for the push button shell to slide, and the counter weight is heavier than the separation magnet.

Further, the push button shell is a sphere, the sliding frame is configured with a cylindrical accommodation space for rotation of the push button shell, the separation magnet is arranged in the push button shell at an upper end of the push button shell, the counter weight is arranged in the push button shell at a lower end of the push button shell, and the counter weight is heavier than the separation magnet.

Further, the push button shell is a square cylinder, the push button shell is rotatably installed on the sliding frame in an axial direction of the square cylinder, the push button shell is hollow, the separation magnet is arranged in the push button shell at an upper end of the push button shell, the counter weight is arranged in the push button shell at a lower end of the push button shell, and the counter weight is heavier than the separation magnet.

Further, the push button shell is a circle cylinder, the push button shell is rotatably installed on the sliding frame in a radial direction of the circle cylinder, the separation magnet is arranged in the push button shell at an upper end of the push button shell, the counter weight is arranged in the push button shell at a lower end of the push button shell, and the counter weight is heavier than the separation magnet.

Further, the push button shell is a circle cylinder, the push button shell is rotatably installed on the sliding frame in an axial direction of the circle cylinder, the separation magnet is arranged in the push button shell at an upper end of the push button shell, the counter weight is arranged in the push button shell at a lower end of the push button shell, and the counter weight is heavier than the separation magnet.

Further, a separation spring is arranged in each of the chutes, one end of the separation spring is connected to one end of the sliding frame in a sliding direction, and the other end of the separation spring is connected to an inner wall of the lower lid.

Further, a push button is provided on a top of the sliding frame, an opening facing outward is defined at a center of the upper lid, an upper end of the push button passes through the opening.

Further, three arc-shaped connection parts are provided on a circumference of the upper rotary knob shell at equal intervals, three slots are defined on the upper rotary knob shell at equal intervals, three cuts are provided on a circumference of the lower rotary knob shell at equal intervals, three buckles are provided on the lower rotary knob shell at equal intervals, the three arc-shaped connection parts and the cuts together form a complete hemisphere after being assembled, and the buckles are snapped in the slots.

Further, an outer wall of the rotary knob shell at the end with the counter weight is provided with text, icons or color blocks representing an attracted state of the tea strainer, the outer wall of the rotary knob shell at the end with the separation magnet is provided with text, icons or color blocks representing a separation state of the tea strainer.

Further, the outer wall of the push button shell at the end with the counter weight is provided with text, icons or color blocks representing an attracted state of the tea strainer, and the outer wall of the push button shell at the end with the separation magnet is provided with text, icons or color blocks representing a separation state of the tea strainer.

Further, the lower lid is configured with a water outlet, the upper lid is assembled with a flap cover that can be opened upward, a snap protrusion for flap cover is provided on an inner wall of the flap cover, a slot for flap cover is defined on a sidewall of the lower lid, the flap cover is covered on the lower lid in such a way, that the snap protrusion for flap cover is snapped in the slot, and a sealing plug configured to seal the water outlet is provided at a bottom of the flap cover.

Further, an elastic piece of flap cover is provided in the flap cover.

Further, the tea strainer includes a tea strainer cap and a hollow tea strainer body configured to be opened upward, the tea strainer cap is covered on the tea strainer body to form an accommodation space for accommodating tea leaves, a top of the tea strainer cap is integrally formed with a magnetic attraction device, the magnetically attractive metal block is provided in the magnetic attraction device, and after the tea strainer cap is covered on the tea strainer body, a center of gravity of the tea strainer body is close to the tea strainer cap.

Further, the tea strainer cap is heavier than the tea strainer body.

Further, the magnetic attraction device is detachably installed on the top of the tea strainer cap, the magnetic attraction device is installed on the tea strainer cap through snap-fit or encapsulation, the magnetic attraction device is integrally formed, and an outer surface on the top of the tea strainer cap is configured with an annular positioning groove configured to be engaged with the cup lid for positioning.

Further, a first accommodating chamber and a second accommodating chamber are respectively defined in the magnetic attraction device from top to bottom, the first accommodating chamber is configured to accommodate the magnetically attractive metal block, and the second accommodating chamber is configured to accommodate a counter weight.

Further, the magnetic attraction device mainly includes an upper magnetic snap and a lower magnetic snap, the top of the tea strainer cap is configured with an assembling through hole configured for the upper magnetic snap to pass through, the upper magnetic snap is engaged with the lower magnetic snap in an up-and-down orientation and is fixed on the top of the tea strainer cap at the same time in a snap-fit manner after the upper magnetic snap passes through the assembling through hole, the upper magnetic snap is engaged with the lower magnetic snap in the up-and-down orientation to internally form a magnet mounting part for accommodating the magnetically attractive metal block and to form an annular counter weight mounting part on an outer wall, and the counter weight is correspondingly configured in an annular shape.

Further, the tea strainer cap is covered on the tea strainer body through a rotary assembly.

Further, the rotary assembly includes a rotary shaft and a mounting part for rotary shaft, the rotary shaft is rotatably installed in the mounting part for rotary shaft.

Further, the rotary shaft is arranged on an edge of a bottom of the tea strainer cap in an axial direction of the tea strainer body, the mounting part for rotary shaft protrudes from an outer wall of the tea strainer body in the axial direction of the tea strainer body, the tea strainer cap can rotate inwards to cover the tea strainer body through a fit of the rotary shaft and the mounting part for rotary shaft.

Further, an outer wall of the tea strainer cap is provided with a connection part for rotary shaft, the mounting part for rotary shaft protrudes from an outer wall of the tea strainer body in a radial direction of the tea strainer body, the rotary shaft passes through the tea strainer body and mounting part for rotary shaft in the radial direction of the tea strainer body, the tea strainer cap can rotate downwards to cover the tea strainer body through a fit of the rotary shaft and the mounting part for rotary shaft.

Further, a diagonal length of the tea strainer - a diameter of a cup liner < 0.

Further, a mass of the tea strainer as a whole / a contact area between the tea strainer and the cup lid $\geq 0.7$.

Further, a movement distance of the separation mechanism for tea strainer ^5mm.

Further, a net mass of the tea strainer as a whole is 20g-90g.

Further, a Gaussian value of the magnetically attractive metal block arranged in the tea strainer is ^2500Gs, a Gaussian value of the separation magnet is ≥2500Gs.

Further, in an attracted state, a distance between the magnetically attractive metal block arranged in the tea strainer and the separation magnet arranged in the cup lid is no more than 15 mm.

Further, when the tea strainer is nonspherical, a diagonal length of the tea strainer is greater than a diameter of the cup liner.

Beneficial technical effects:

The principle that the magnet attracts magnetically attractive metal block or iron block is adopted. By providing the separation mechanism for tea strainer on the cup lid, the cup lid can attract or release the tea strainer. When brewing tea, the counter weight is pressed to raise the separation magnet, or the push button is radially pushed to slide or roll the stressed block, so that the stressed block rotates, to make the separation magnet move away from the magnetically attractive metal block. The attraction force to the magnetically attractive metal block from the separation magnet is decreased, when it is lower than the gravity of the tea strainer, the tea strainer falls down to the bottom of the cup body under gravity, and it is started to brew tea. When it is necessary to stop brewing tea, the cup body is turned over, the tea strainer moves to the cup lid due to the gravity, the separation magnet attracts the magnetically attractive metal block, such that the tea strainer is attracted to the bottom of the cup lid, and the tea strainer is separated from the tea water, thereby achieving the adjustment of tea concentration. At the same time, the function for showing the brewing and attracted states of the tea strainer through the cup lid is achieved by means of the design of the uneven mass distribution at two ends of the stressed block (the end with the separation magnet is lighter while the end with the counter weight is heavier) in combination with the logos or color blocks at the two ends of the stressed block representing the "brewing" and "attracted" state respectively. The technical solution of the present application has a simple structure, is convenient to use, has good stability, by which the tea concentration can be adjusted and the brewing and attracted states of the tea strainer can be reflected by the cup lid, which solves the problem that tea concentration cannot be adjusted in the existing technology and that the brewing and attracted states of the tea strainer cannot be reflected when the cup lid is used with the opaque cup body. The technical solution of the present applicaiton can be widely used in other devices by which the concentration is required to be adjusted, and has good market promotion value.

**Description of the drawings**

FIG. 1 is an exploded diagram showing the overall structure of the push button of the magnetic device in an embodiment of the present application;

FIG. 2 is an exploded diagram showing the overall structure of the rotary knob of the magnetic device in an embodiment of the present application;

FIG. 3 is a diagram showing the overall structure of the push button of the magnetic device in an embodiment of the present application;

FIG. 4 is a diagram showing the overall structure of the rotary knob of the magnetic device in an embodiment of the present application;

FIG. 5 is a diagram showing the assembled separation mechanism for the cup lid and the tea strainer in an embodiment of the present application;

FIG. 6 is a diagram showing the internal structure of the cup lid in an embodiment of the present application;

FIG. 7 is a diagram showing the assembled separation mechanism for cup lid and tea strainer in an embodiment of the present application;

FIG. 8 is a diagram showing the internal structure of the cup lid in an embodiment of the present application;

FIG. 9 is a diagram showing the assembled cup lid and rotary knob shell in an embodiment of the present application;

FIG. 10 is a diagram showing the assembled lower lid and rotary knob shell in an embodiment of the present application;

FIG. 11 is a diagram showing the assembled cup lid and rotary knob shell in an embodiment of the present application;

FIG. 12 is a diagram showing the assembled lower lid and rotary knob shell in an embodiment of the present application;

FIG. 13 is a diagram showing the assembled cup lid and rotary knob shell in an embodiment of the present application;

FIG. 14 is a diagram showing the assembled lower lid and rotary knob shell in an embodiment of the present application;

FIG. 15 is a diagram showing the assembled cup lid and rotary knob shell in an embodiment of the present application;

FIG. 16 is a diagram showing the assembled lower lid and rotary knob shell in an embodiment of the present application;

FIG. 17 is a diagram showing the assembled cup lid and push button shell in an embodiment of the present application;

FIG. 18 is a diagram showing the assembled cup lid and push button shell in an embodiment of the present application;

FIG. 19 is a diagram showing the assembled lower lid and push button shell in an embodiment of the present application;
FIG. 20 is a diagram showing the assembled lower lid and push button shell in an embodiment of the present application;
FIG. 21 is a diagram showing the assembled lower lid and push button shell in an embodiment of the present application;
FIG. 22 is a diagram showing the assembled lower lid and push button shell in an embodiment of the present application;
FIG. 23 is a diagram showing the assembled lower lid and push button shell in an embodiment of the present application;
FIG. 24 is a diagram showing the upper lid in an embodiment of the present application;
FIG. 25 is a diagram showing the upper lid in an embodiment of the present application;
FIG. 26 is a diagram showing the upper lid in an embodiment of the present application;
FIG. 27 is a diagram showing the assembled cup lid and flap cover in an embodiment of the present application;
FIG. 28 is a diagram showing the flap cover in an embodiment of the present application;
FIG. 29 is a diagram showing the cup lid in an embodiment of the present application;
FIG. 30 is a diagram showing the lower lid facing upwards in an embodiment of the present application;
FIG. 31 is a diagram showing the rotary knob shell in an embodiment of the present application;
FIG. 32 is a diagram showing the upper rotary knob shell in an embodiment of the present application;
FIG. 33 is a diagram showing the lower rotary knob shell in an embodiment of the present application;
FIG. 34 is a diagram showing the overall structure of the tea strainer in an embodiment of the present application;
FIG. 35 is an exploded diagram showing the tea strainer in an embodiment of the present application;
FIG. 36 is a diagram showing the tea strainer cap facing upwards in an embodiment of the present application;
FIG. 37 is an overall exploded diagram of FIG. 17;
FIG. 38 is an overall exploded diagram of FIG. 20;
FIG. 39 is a schematic axial sectional view of the push button shell in FIG. 38;
FIG. 40 is an overall exploded diagram of FIG. 21;
FIG. 41 is a schematic axial sectional view of the push button shell in FIG. 40;
FIG. 42 is an overall exploded diagram of FIG. 22;
FIG. 43 is a schematic axial sectional view of the push button shell in FIG. 42;
FIG. 44 is an overall exploded diagram of FIG. 23;
FIG. 45 is a schematic axial sectional view of the push button shell in FIG. 44;
FIG. 46 is an overall exploded diagram of FIG. 15
FIG. 47 is a perspective diagram showing the structure of the magnetic tea strainer in embodiment 16 of the present application;
FIG. 48 is an exploded diagram showing the structure of the magnetic tea strainer in embodiment 16 of the present application;
FIG. 49 is an axial section view of FIG. 47;
FIG. 50 is a perspective diagram showing the structure of the magnetic tea strainer in embodiment 17 of the present application;
FIG. 51 is an exploded diagram showing the structure of the magnetic tea strainer in embodiment 17 of the present application;
FIG. 52 is an axial section view of FIG. 50;
FIG. 53 is a perspective diagram showing the structure of the magnetic tea strainer in embodiment 18 of the present application;
FIG. 54 is an exploded diagram showing the structure of the magnetic tea strainer in embodiment 18 of the present application;
FIG. 55 is an axial section view of FIG. 53;
FIG. 56 is a perspective diagram showing the structure of the magnetic tea strainer in embodiment 19 of the present application;
FIG. 57 is an exploded diagram showing the structure of the magnetic tea strainer in embodiment 19 of the present application;
FIG. 58 is an axial section view of FIG. 56;
FIG. 59 is a perspective diagram showing the structure of the magnetic tea strainer in embodiment 20 of the present application;
FIG. 60 is a diagram showing the tea strainer cap in the magnetic tea strainer in embodiment 20 of the present application that opens outward;
FIG. 61 is an axial section view of FIG. 59;
FIG. 62 is a diagram showing the magnetic tea strainer in embodiment 21 of the present application that opens upward;
FIG. 63 is a perspective diagram showing the structure of the magnetic tea strainer in embodiment 21 of the present application;
FIG. 64 is an exploded diagram showing the structure of the magnetic tea strainer in embodiment 21 of the present application;

FIG. 65 is an axial section view of FIG. 63.
wherein:

| reference sign | name | reference sign | name |
|---|---|---|---|
| 1 | cup body | 312 | decorative ring |
| 2 | tea strainer | 313 | circular opening |
| 3 | cup lid | 314 | rectangular opening |
| 4 | separation mechanism for tea strainer | 315 | opening |
| 5 | magnetic attraction device | 321 | annular positioning protrusion |
| 8 | rotary assembly | 322 | water outlet |
| 11 | cup sleeve | 323 | flap cover |
| 21 | magnetically attractive metal block | 324 | snap protrusion for flap cover |
| 22 | tea strainer cup | 325 | slot for flap cover |
| 23 | lower strainer body | 326 | sealing plug |
| 24 | accommodating chamber | 327 | elastic piece of flap cover |
| 25 | counter weight of tea strainer | 411 | rotary shaft |
| 26 | sealed chamber | 412 | counter weight |
| 27 | rotary snap | 413 | rotary knob shell |
| 28 | mesh | 414 | rotary shaft for rotary knob |
| 31 | upper lid | 415 | push button shell |
| 32 | lower lid | 416 | sliding frame |
| 33 | support pillar | 417 | chute |
| 34 | sealing ring | 418 | separation groove |
| 35 | cavity | 419 | separation spring |
| 41 | stressed block | 4110 | rotary shaft for push button |
| 42 | separation magnet | 4131 | upper rotary knob shell |
| 51 | first accommodating chamber | 4132 | lower rotary knob shell |
| 52 | second accommodating chamber | 4133 | arc-shaped connection part |
| 53 | upper magnetic snap | 4134 | cut |
| 54 | lower magnetic snap | 4135 | slot |
| 55 | magnet mounting part | 4136 | buckle |
| 56 | counter weight mounting part | 4151 | upper push button shell |
| 81 | rotary shaft | 4152 | intermediate push button shell |
| 82 | mounting part for rotary shaft | 4153 | lower push button shell |
| 83 | connection part for rotary shaft | 4161 | push button |
| 211 | annular positioning groove | 4162 | cylindrical accommodation space |
| 221 | assembling through hole | 4163 | transparent window |
| 311 | through hole | | |

**Detailed embodiments**

The present application will be further described in detail in combination with the drawings and specific embodiments. The illustrative embodiment and description described herein is only used to explain the present application, and does not tend to limit the present application.

Embodiment 1:

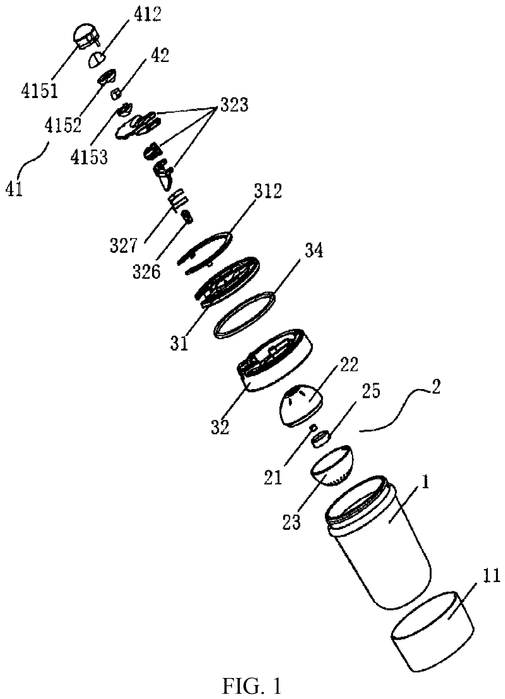

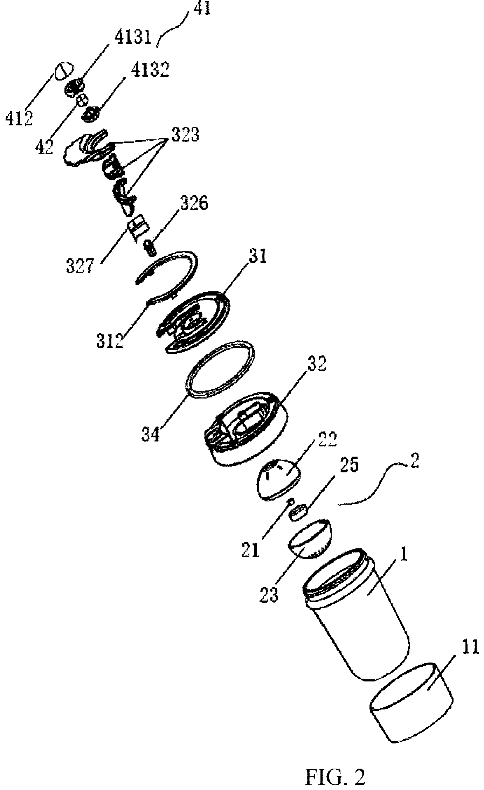

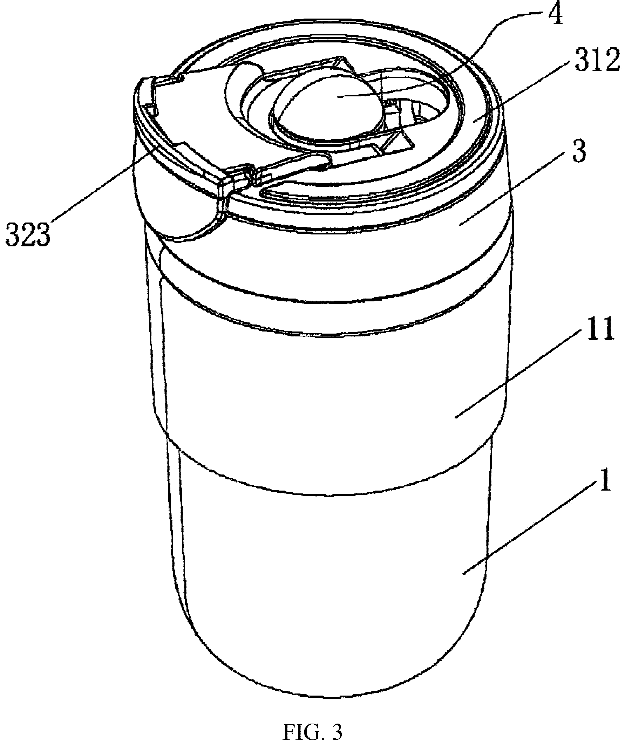

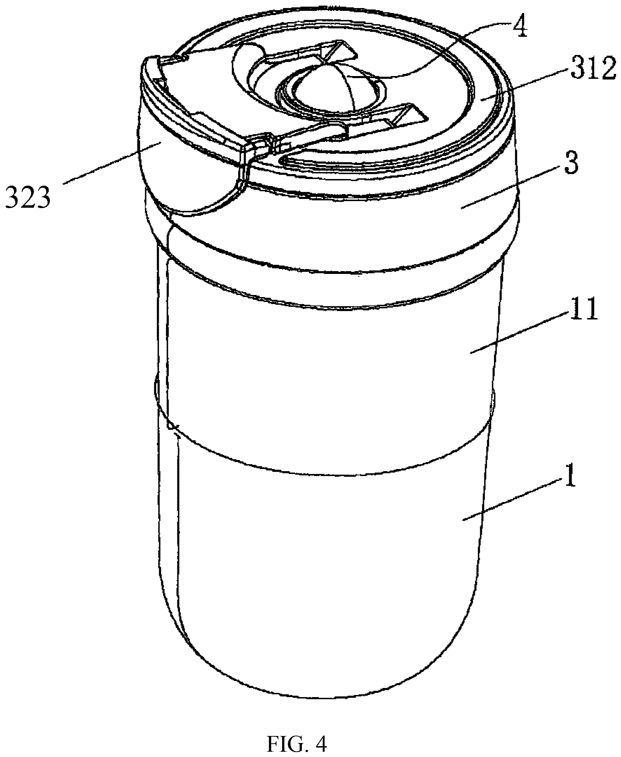

Referring to FIGS. 1-4, a magnetic device includes a cup body 1, a tea strainer 2, and a cup lid that is in sealing connection with the cup body 1. The tea strainer 2 is placed inside the cup body 1 when in use. The cup lid 3 includes an upper lid 31 and a lower lid 32, wherein the upper lid 31 fixedly covers the lower lid 32. Specially, a separation mechanism for tea strainer 4 is provided on the cup lid 3, wherein the separation mechanism for tea strainer 4 includes a stressed block 41 and a separation magnet 42, the separation magnet 42 is mounted on the stressed block 41, and the stressed block 41 under stress changes the relative position between the separation magnet 42 and the cup lid 3. The internal center of the tea strainer 2 is provided with a sealed magnetically attractive metal block 21, the tea strainer 2 is so attracted to the center of the bottom of the cup lid 3, that the separation magnet 42 attracts the magnetically attractive metal block 21. When brewing tea, the stressed block 41 is stressed so as to detach the separation magnet 42 from the magnetically attractive metal block 21, such that the attraction force to the magnetically attractive metal block 21 from the separation magnet 42 is decreased, when it is lower than the gravity of the tea strainer 2, the tea strainer 2 falls down to the bottom of the cup body 1 due to gravity, and the tea is started to be brewed. When it is necessary to stop brewing tea, the cup body 1 can be turned over, such that the tea strainer 2 moves to the cup lid 3 under gravity, and the stressed block 41 makes the separation magnet 42 faces the cup lid 3 due to gravity. Thus, the tea strainer 2 is so attracted to the bottom of the cup lid 3, that the separation magnet 42 attracts the magnetically attractive metal block 21, thereby separating the tea strainer 2 from the water.

Specially, in the technical solution of the present embodiment, the stressed block 41 has a regular geometry with uneven mass distribution, an end of the stressed block 41 with the separation magnet 42 is lighter than an end of the stressed block 41 without the separation magnet 42, due to the gravity, the end of the stressed block 41 without the separation magnet 42 faces downward, the first end of the stressed block 41 with the separation magnet 42 faces upward, or an external force is applied to the stressed block 41, so that the relative position between the separation magnet 42 and the cup lid 3 is changed by the stressed block 41.

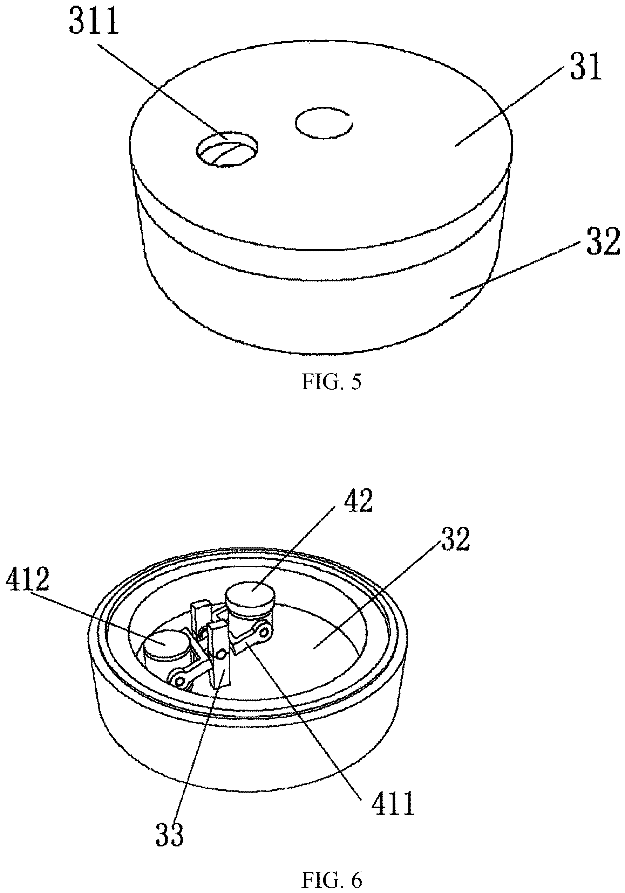

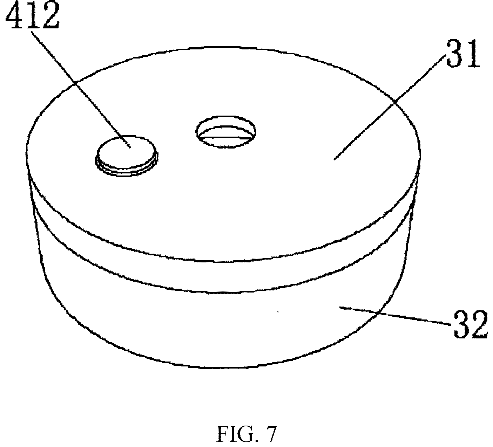

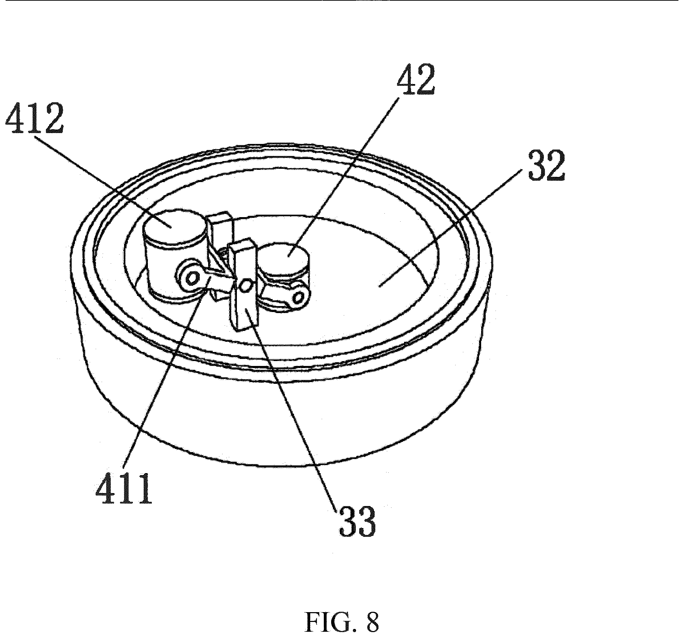

Referring to FIG. 5 to FIG. 8, in the technical solution of the present embodiment, the stressed block 41 has a level structure. A support pillar 33 is provided between the upper lid 31 and the lower lid 32. The stressed block 41 includes a rotary shaft 411 and a counter weight 412, wherein the rotary shaft 411 is rotatably mounted on the support pillar 33, the separation magnet 42 is mounted on one end of the rotary shaft 411, while the counter weight 412 is mounted on the other end of the rotary shaft 411, and the counter weight 412 is heavier than the separation magnet 42. The upper lid 31 is configured with a through hole 311 for counter weight 412 to pass through. It should be understood, since the counter weight 412 is heavier than the separation magnet 42, the rotary shaft 411 acts as a balance structure and the counter weight 412 is always lower than the separation magnet 42. When the cup lid 3 and the cup body 1 is in an inverted state, under gravity, the end of the rotary shaft 411 with the counter weight 412 is below, while the end of the rotary shaft 411 with the separation magnet 42 is above, so that the tea strainer 2 is close to the bottom of the cup lid 3 and is attracted by the separation magnet 42. After the cup body 1 is returned to the upright position, the tea strainer 2 remains in the attracted state, such that the tea strainer 2 is separated from the tea water. When it is necessary to brew tea again, the counter weight 412 can be pressed, the separation magnet 42 rises while the separation magnet 42 gradually moves away from the bottom of the cup lid 3 by means of the rotary shaft 411, so that the attraction force to the magnetically attractive metal block 21 from the separation magnet 42 is decreased. Thus the tea strainer 2 falls down to the bottom of the cup body 1 under gravity when the attraction force is less than the gravity of the tea strainer 2, and it is started to brew tea. It should be understood that the counter weight 412 can be packaged in a sealing manner by encapsulation.

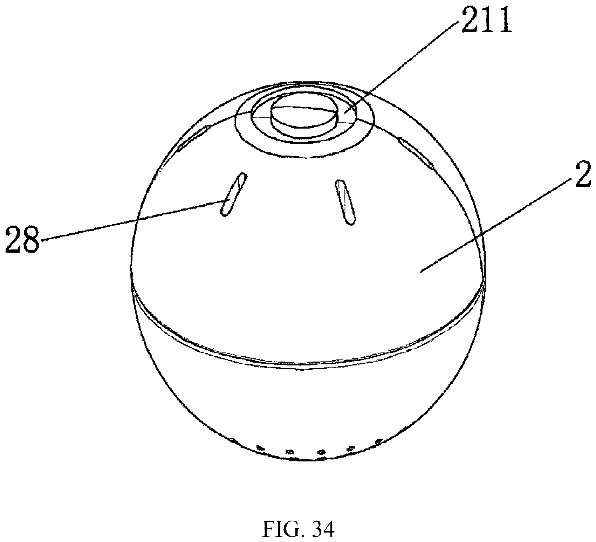

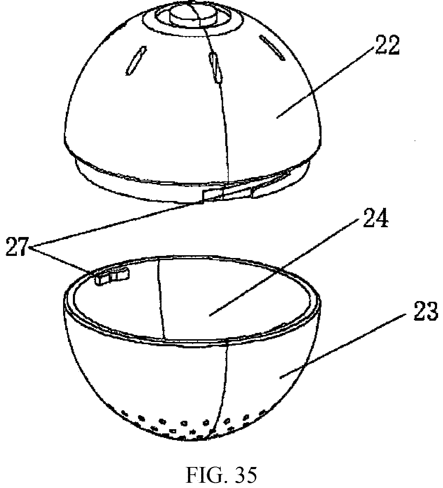

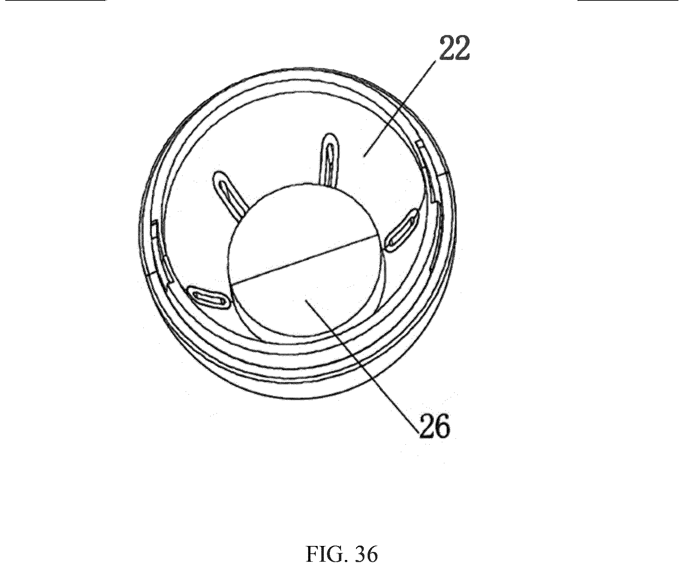

Referring to FIGS. 34-36, specially, in the technical solution of the present embodiment, the tea strainer 2 includes a tea strainer cap 22 and a lower strainer body 23; the tea strainer cap 22 covers the lower strainer body 23 to form an accommodating chamber 24 for placing tea leaves.

The top of the tea strainer cap 22 is configured with a sealed chamber 26 configured to accommodate the magnetically attractive metal block 21 and the counter weight of tea strainer 25, wherein the magnetically attractive metal block 21 and the counter weight of tea strainer 25 are stacked in the sealed chamber 26. It should be understood that in terms of production process, the accommodating chamber 24 will encapsulate the magnetically attractive metal block 21 and the counter weight of tea strainer 25, so that the magnetically attractive metal block 21 and the counter weight of tea strainer 25 are not exposed. In production, the seal of the magnetically attractive metal block 21 and the counter weight of tea strainer 25 can be implemented by encapsulation.

Referring to FIG. 34, specially, in the technical solution of the present embodiment, the top of the outer surface of the tea strainer cap 22 is configured with an annular positioning groove 211 configured to be snap-fitted with the lower lid 32 for positioning. The bottom of the lower lid 32 is provided with an annular positioning protrusion 321, wherein the annular positioning groove 211 is snap-fitted with the annular positioning protrusion 321. It should be understood, when the stressed block is stressed, so that the relative position changes, the tea strainer 2 wouldn't move as the relative position of the stressed block changes, thus the tea strainer 2 would separate from the cup lid 3 under gravity and would fall down to the bottom of the cup body 1 under gravity, and it is started to blew.

Specially, in the technical solution of the present embodiment, the tea strainer cap 22 and the lower strainer body 23 are in snap-fitting connection by the rotary snap 27. It should be understood that the rotary snap 27 is provided for facilitating the fast disassembling and the assembling of the tea strainer cap 22 and the lower strainer body 23, which is convenient for the user to fill the tea leaves in or pour the tea leaves out of the tea strainer 2.

Specially, in the technical solution of the present embodiment, both the tea strainer cap 22 and the lower strainer body 23 are configured with meshes 28 for sufficient contact between water and tea leaves when brewing tea.

Specially, in the technical solution of the present embodiment, the cup lid 3 is screwed to the cup body 1. The bottom of the cup lid 3 is provided with a sealing ring 34 for the sealing connection between the cup lid 3 and the cup body 1. It should be illustrated that the sealing ring 34 is provided at the connection between the cup lid 3 and the cup body 1, to ensure the sealing effect of the whole product. When the cup body 1 is turned over, the tea water will not leak out, which contributes to the use convenience and safety.

Specially, in the technical solution of the present embodiment, the magnetically attractive metal block 21 is an iron block, while the separation magnet 42 is a strong magnet. It should be illustrated that, the magnetically attractive metal block 21 can also be made of any metal with magnetically attractive ability such as drill, shackle and their alloys, which is not limited to an iron block. The separation magnet 42 is a strong magnet, which ensures the magnetic attraction strength, such that the attraction force to the magnetically attractive metal block 21 from the separation magnet 42 is greater than the gravity of the tea strainer 2 in certain distance range.

Specially, in the technical solution of the present embodiment, the cup body 1 is sleeved with a cup sleeve 11. It should be noted that patterns or other designs can be added to the cup sleeve 11 to increase the overall aesthetics of the product.

Specially, in the technical solution of the present embodiment, the upper end surface of the upper lid 31 is assembled with a decorative ring 312. It should be noted patterns or other designs can be added to the decorative ring 312 to increase the overall aesthetics of the product.


Embodiment 2:

In the embodiment 2, the structures of the stressed block 41 and the cup lid 3 are improved, which is different from the above embodiment as follows.

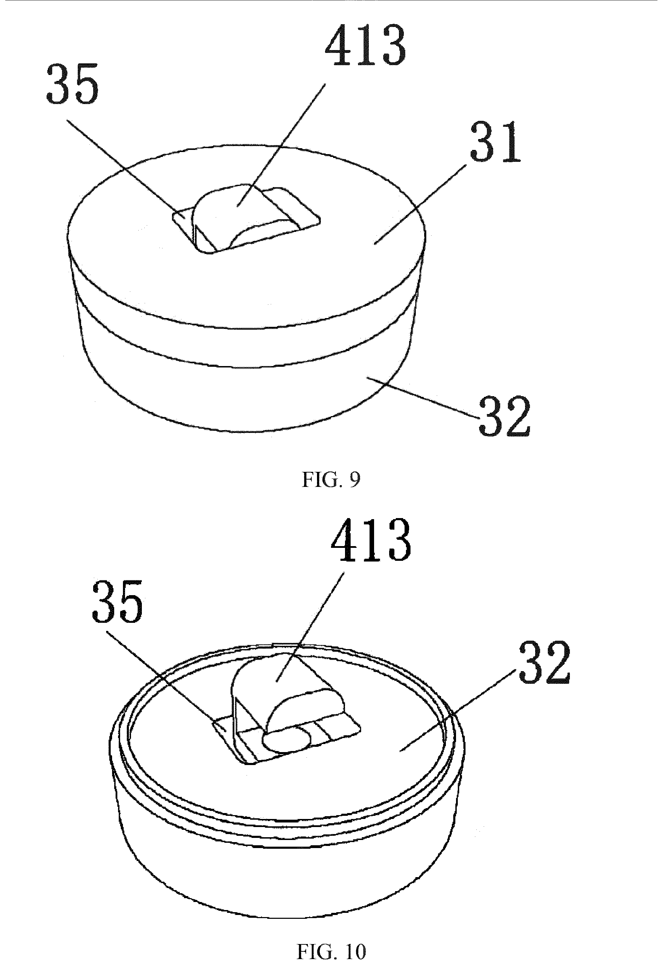

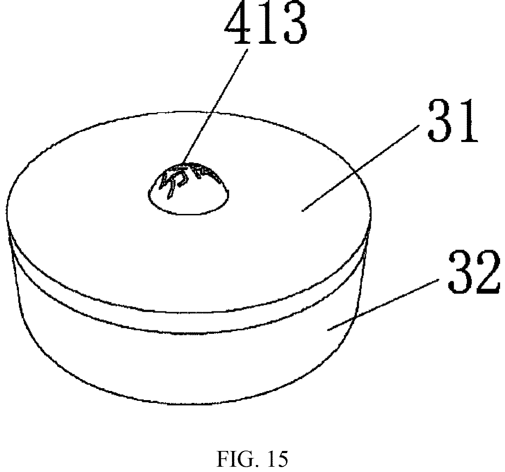

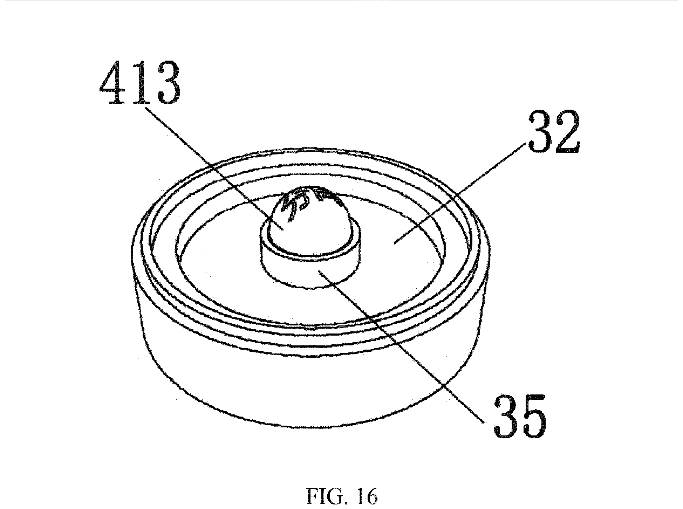

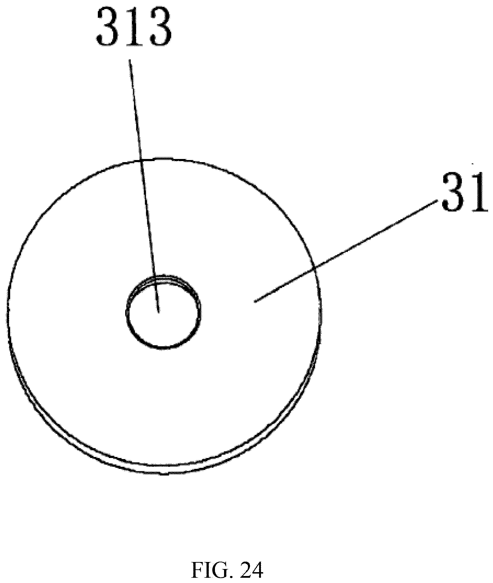

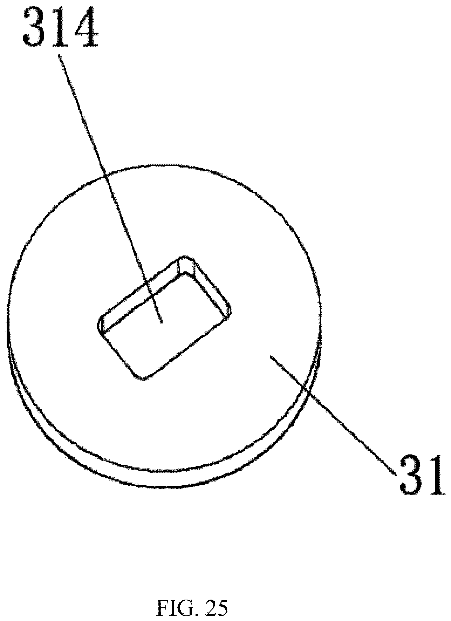

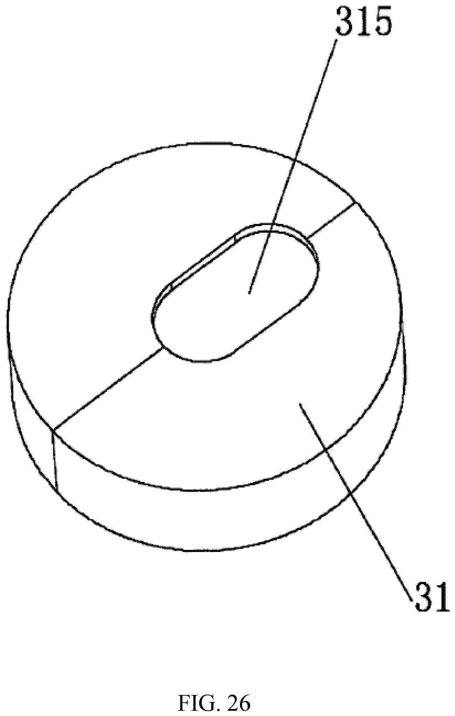

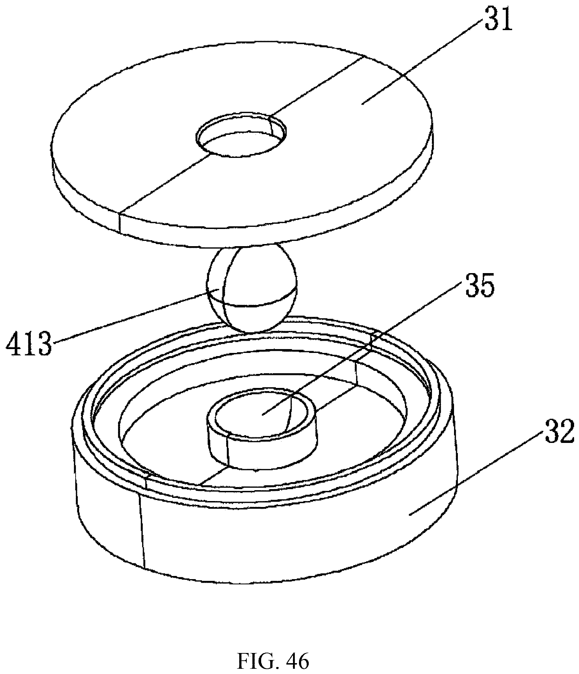

Referring to FIGS. 9-16 and FIG. 46, particularly in the technical solution of the present embodiment, the stressed block 41 has a rotary structure, and the stressed block 41 includes a rotary knob shell 413 and a counter weight 412, wherein the separation magnet 42 and the counter weight 412 are respectively arranged at the upper end and the lower end of the rotary knob shell 413. The first end of the rotary knob shell 413 with the separation magnet 42 is lighter than the second end of the rotary knob shell 413 with the counter weight 412, so that the center of gravity of the rotary knob shell 413 is biased to the second end of the rotary knob shell 413 with the counter weight 412. When the rotary knob shell 413 is only subjected to its gravity, it will remain in a state that its first end with the separation magnet 42 is above and its second end with the counter weight 412 is below. By applying an external force to the rotary knob shell 413, the rotary knob shell 413 can rotate, so as to change the relative position of the separation magnet 42 to the bottom of the cup lid. When the external force disappears, the rotary knob shell 413 returns to the state that the first end with the separation magnet 42 is above, while the second end with the counter weight 412 is below. The first end of the rotary knob shell 413 with the separation magnet 42 will be above when the rotary knob shell 413 is only subjected to its gravity, which means that the sign representing "brewing" is above, too, to show that the tea strainer 2 is in the brewing state, in case that the first end of the rotary knob shell 413 with the separation magnet 42 is marked with a sign representing "brewing", while the second end of the rotary knob shell 413 with the counter weight 412 is marked with a sign representing "attracted". A cavity 35 configured to accommodate the rotary knob shell 413 is formed between the mated upper lid 31 and lower lid 32, the rotary knob shell is rotatably mounted in the cavity 35. Referring to FIGS. 24-26, a circular opening 313 or rectangular opening 314 extends from the center of the upper lid, the upper end of the rotary knob shell 413 protrudes from the circular opening 313 or the rectangular opening 314. It should be illustrated, when a force is applied to the rotary knob shell 413 (namely, when the rotary knob shell 413 is manually flicked), the rotary knob shell 413 rotates under force, so that the separation magnet 42 inside the rotary knob shell 413 moves away from the magnetically attractive metal block 21 separated by the bottom of the cup lid 3. The attraction force to the magnetically attractive metal block 21 from the separation magnet 42 is gradually decreased, and when the attraction force is less than the gravity of the tea strainer 2, the tea strainer 2 leaves the cup lid 3 to fall down in the cup body 1, and it is started to brew tea. Hereby when the external force applied to the rotary knob shell 413 disappears, the rotary knob shell 413 returns to the state that the first end with the separation magnet 42 is above and the second end with the counter weight 412 is below due to gravity. At this time, in the case that the first end of the rotary knob shell 413 with the separation magnet 42 is marked with the sign representing "brewing", the sign will also be above, which means that the tea strainer 2 is in the brewing state. When it is necessary to stop brewing tea, the cup body 1 is inverted, meanwhile, the cup lid 3 is also in an inverted state, and the rotary knob shell 413 rotates in the cavity 35 under gravity. The first end of the rotary knob shell 413 with the separation magnet 42 is lighter than the second end of the rotary knob shell 413 with the counter weight 412, so that the center of gravity of the rotary knob shell 413 is biased to the second end with the counter weight 412. In the case that the rotary knob shell 413 is only subjected to its gravity, the rotary knob shell 413 remains in the state that the first end with the separation magnet 42 is above and the second end with the counter weight 412 is below. At this time, the separation magnet 42 remains on the top, to wait to attract the magnetically attractive metal block 21 in the tea strainer 2 when the tea strainer falls down to the bottom of the cup lid 3. After the tea strainer 2 is close to the bottom of the cup lid 3 and is attracted by the separation magnet 42 and the cup body 1 returns to the upright position, the tea strainer 2 is still be attracted, such that the tea strainer 2 is separated from the tea water. In this circumstance, the first end of the rotary knob shell 413 with the separation magnet 42 remains at the bottom because of the attraction of the magnetically attractive metal block 21, and the second end of the rotary knob shell 413 with the counter weight is above. At this time, in the case that the second end of the rotary knob shell 413 with the counter weight 412 is marked with the sign representing "attracted", the sign will be above, which means that the tea strainer 2 is in the attracted state and is separated from the tea water.

Embodiment 3:

The structure of the rotary knob shell 413 in embodiment 3 is improved based on embodiment 2. The difference therebetween is as follows.

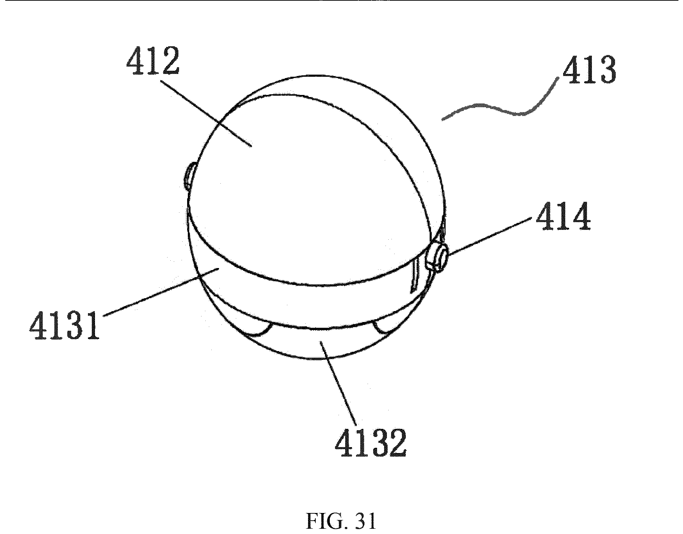

Referring to FIG. 31, particularly in the technical solution of the present embodiment, the sidewall of the rotary knob shell 413 is symmetrically provided with a rotary shaft for rotary knob 414, wherein the rotary knob shell 413 is rotatably mounted in the cavity 35 through the rotary shaft for rotary knob 414.

Embodiment 4:

The structure of the rotary knob shell 413 in embodiment 4 is improved based on embodiment 3. The difference therebetween is as follows.

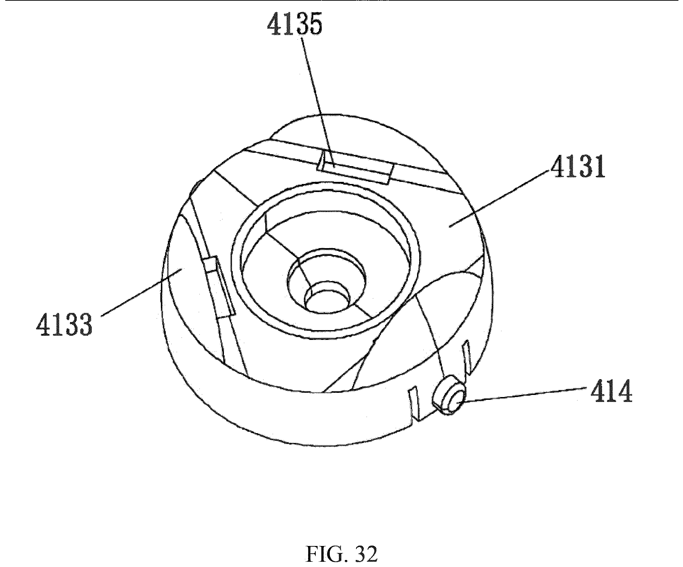

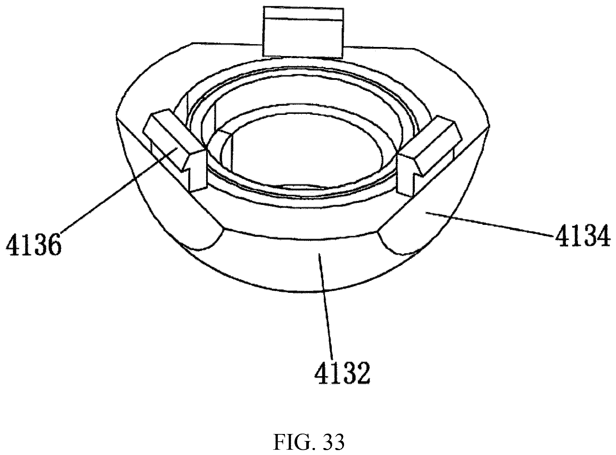

Referring to FIG. 31 to FIG. 33, in particular in the technical solution of the present embodiment, the rotary knob shell 413 is a sphere. The rotary knob shell 413 includes an upper rotary knob shell 4131 and a lower rotary knob shell 4132, wherein the lower rotary knob shell 4132 is scarfed in and snap-fitted with the upper rotary knob shell 4131. The counter weight 412 is mounted on the top of the upper rotary knob shell 4131, while the separation magnet 42 is mounted inside the lower rotary knob shell 4132, and the counter weight 412 is heavier than the separation magnet 42.

Specially in the technical solution of the present embodiment, the circumference of the upper rotary knob shell 4131 is equidistantly provided with three arc-shaped connection parts 4133, the upper rotary knob shell 4131 is equidistantly provided with three slots 4135, the circumference of the lower rotary knob shell 4132 is equidistantly provided with three cuts 4134, the lower rotary knob shell 4132 is equidistantly provided with three buckles 4136. The arc-shaped connection parts 4133 and the cuts 4134 are assembled, so as to form a complete hemisphere, and the buckles 4136 are respectively in snap-connection with the slots 4135.

In particular in the technical solution of the present embodiment, the outer sidewall of the second end of the rotary knob shell 413 with the counter weight 412 is provided with the sigh representing "attracted", while the outer sidewall of the first end of the rotary knob shell 413 with the separation magnet 42 is provided with the sign representing "separated". It should be illustrated, it is convenient for the user to identify whether the tea strainer 2 and the cup lid 3 are in the attracted or separated state with the help of the sigh representing "attracted" and the sign representing "separated". When an opaque cup body 1 is adopted, the usage performance of the product is hereby improved.

Embodiment 5:

The structure of the rotary knob shell 413 in embodiment 5 is improved based on embodiment 3. The difference therebetween is as follows.

Referring to FIG. 9 and FIG. 10, specifically in the technical solution of the present embodiment, the rotary knob shell 413 is a square cylinder, the rotary knob shell 413 is rotatably installed in the cavity 35 in the axial direction of the square cylinder. The rotary knob shell 413 is hollow, the separation magnet 42 is arranged inside the rotary knob shell 413 at the upper end thereof while the counter weight 412 is arranged in the rotary knob shell 413 at the lower end thereof, and the counter weight 412 is heavier than the separation magnet 42.

Embodiment 6:

The structure of the rotary knob shell 413 in embodiment 6 is improved based on embodiment 3. The difference therebetween is as follows.

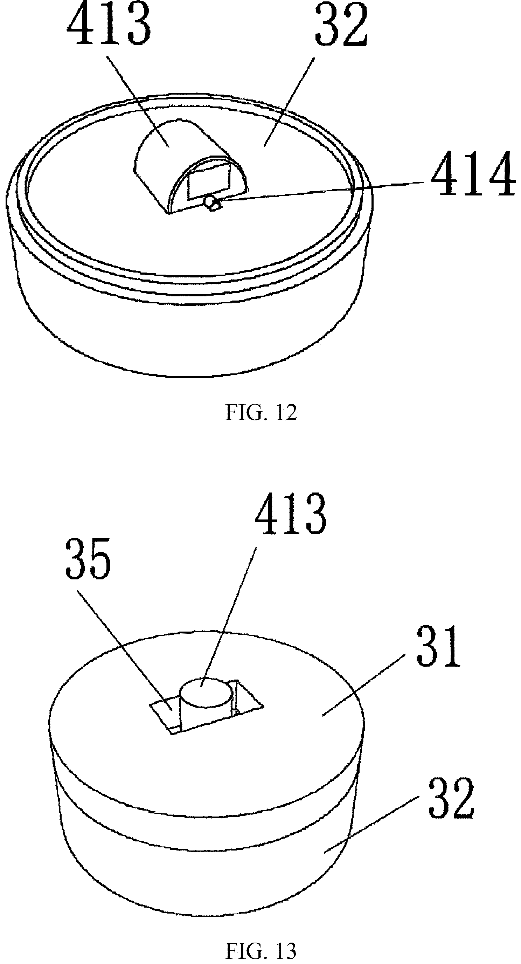

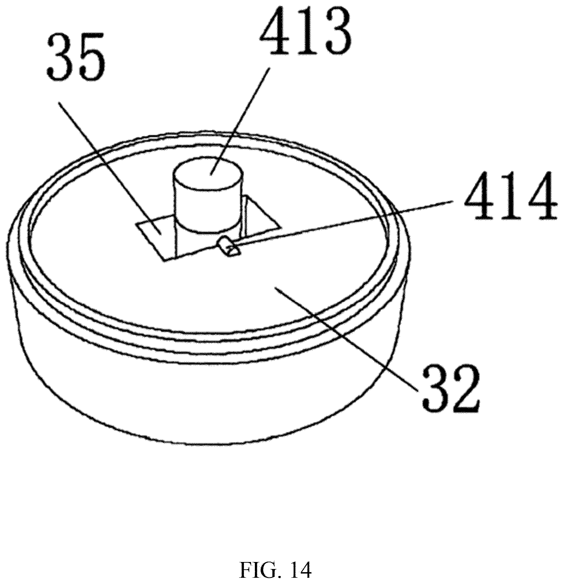

Referring to FIG. 13 and FIG. 14, specifically in the technical solution of the present embodiment, the rotary knob shell 413 is a circle cylinder, the rotary knob shell is rotatably installed in the cavity 35 in the radial direction of the circle cylinder. The separation magnet 42 is arranged in the rotary knob shell 413 at the upper end thereof while the counter weight 412 is arranged in the rotary knob shell 413 at the lower end thereof, and the counter weight 412 is heavier than the separation magnet 42.

Embodiment 7:

The structure of the rotary knob shell 413 in embodiment 7 is improved based on embodiment 3. The difference therebetween is as follows.

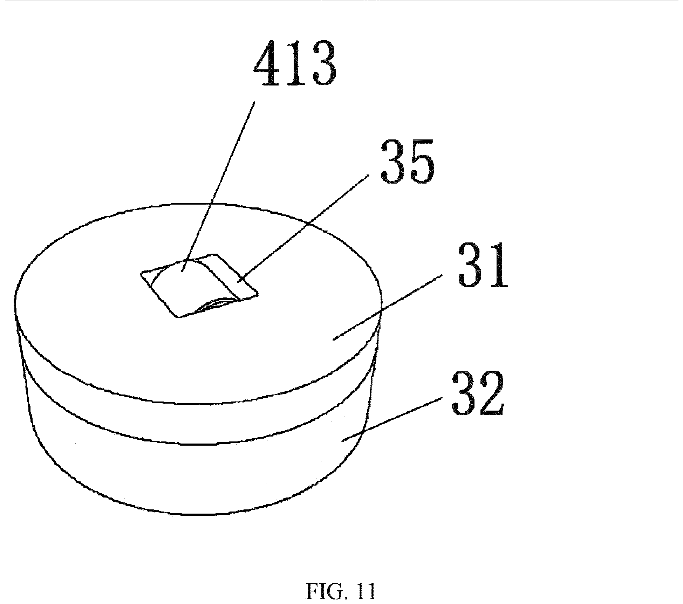

Referring to FIG. 11 and FIG. 12, specifically in the technical solution of the present embodiment, the rotary knob shell 413 is a circle cylinder, the rotary knob shell 413 is rotatably installed in the cavity 35 in the axial direction of the circle cylinder. The separation magnet 42 is arranged in the rotary knob shell 413 at the upper end thereof while the counter weight 412 is arranged in the rotary knob shell 413 at the lower end thereof, and the counter weight 412 is heavier than the separation magnet 42.

Embodiment 8:

In the embodiment 8, the structures of the stressed block 41 and the cup lid 3 are improved, which is different from the above embodiment as follows.

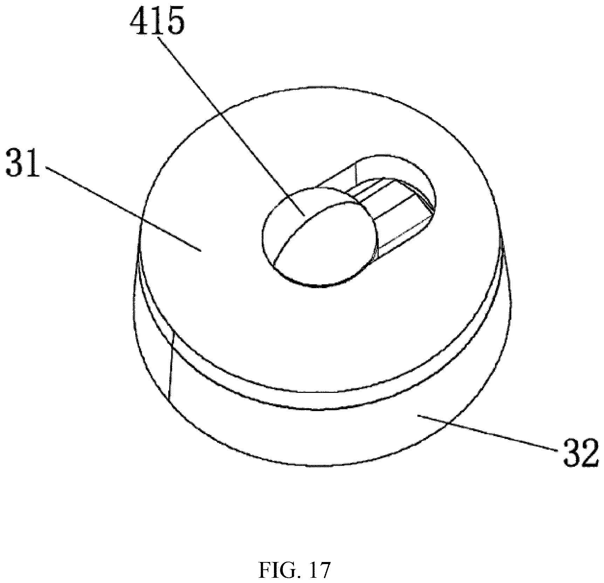

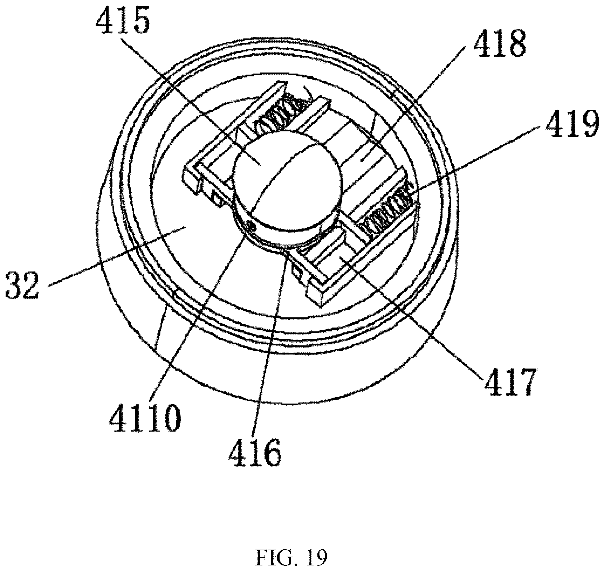

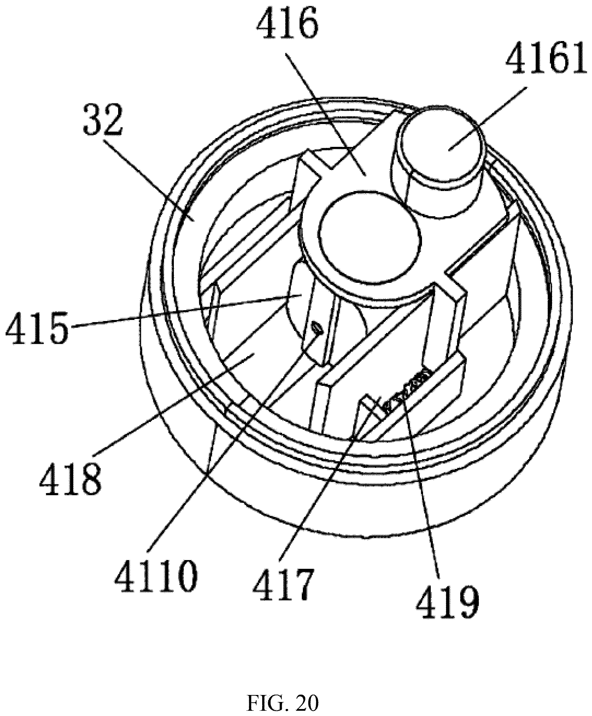

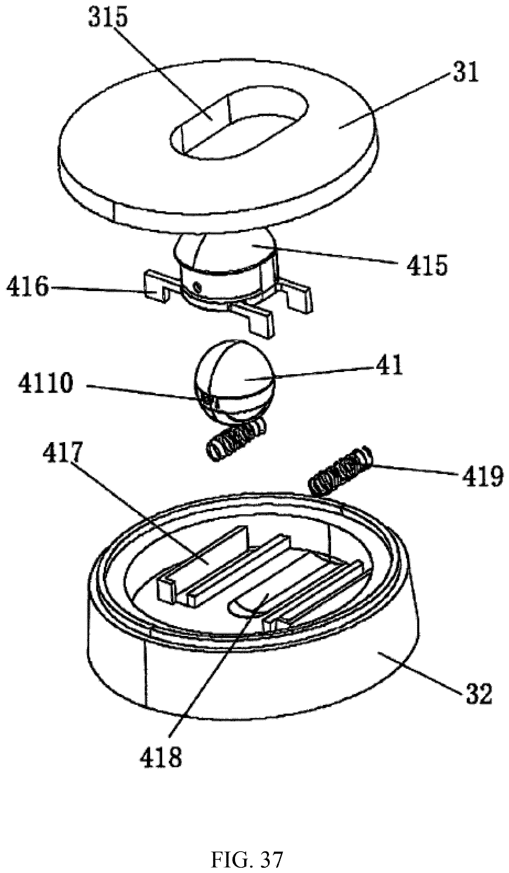

Referring to FIG. 17 and FIG. 19, as well as FIG. 37, it should be noted that the structures of the push button shell 415 and the sliding frame 416 in FIG. 19 are different from the structures of the push button shell 415 and the sliding frame 416 in FIGS. 20-23. The stressed block 41 includes a push button shell 415, a sliding frame 416 and a counter weight 412, the separation magnet 42 and the counter weight 412 are arranged in the push button shell 415 respectively at the upper end and the lower end thereof. The push button shell 415 is mounted on the sliding frame 416. The lower lid 32 is radially symmetrically configured with chutes 417 configured for accommodating the sliding frame 416, and a separation groove 418 configured for the push button shell 415 to slide is defined between the chutes 417.

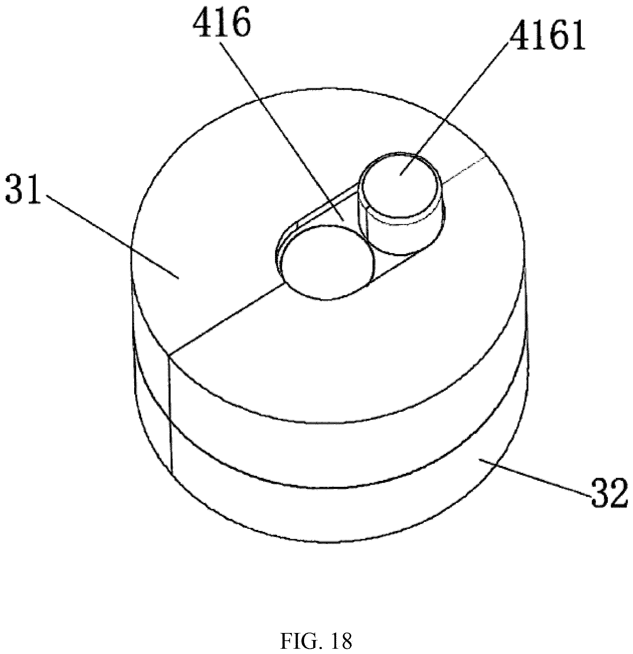

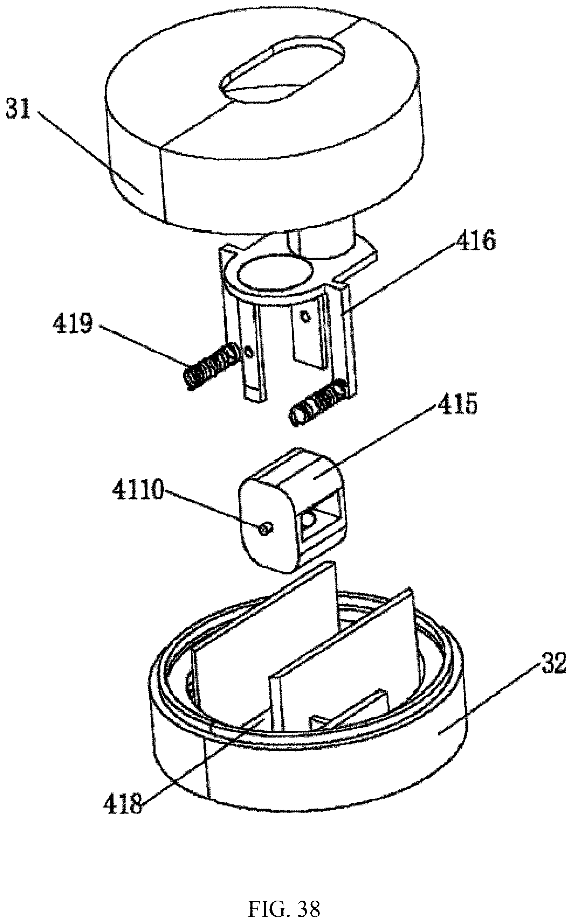

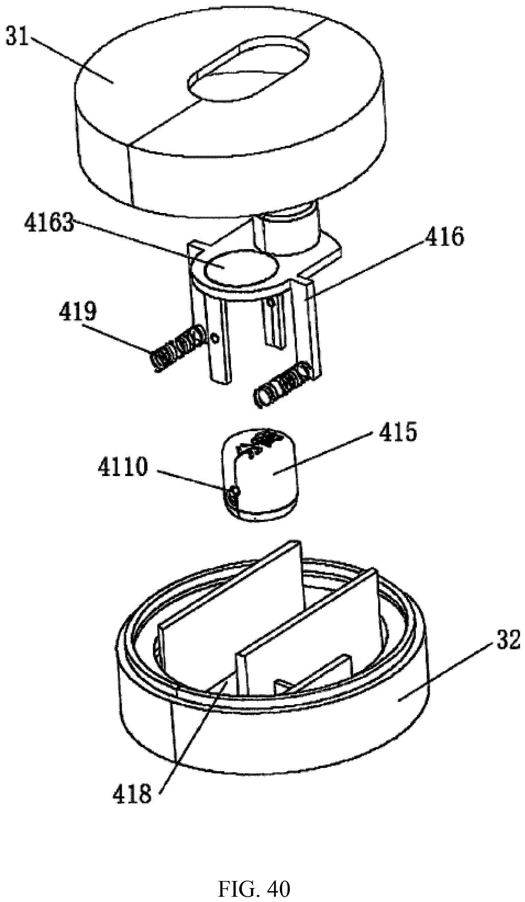

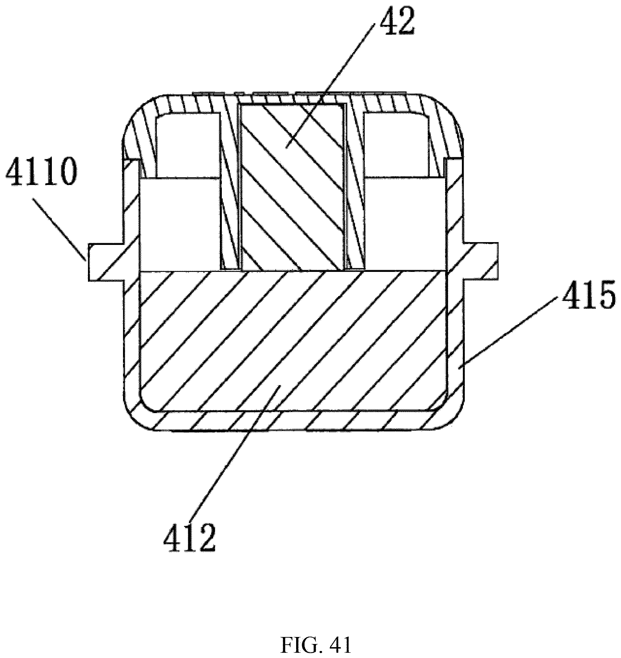

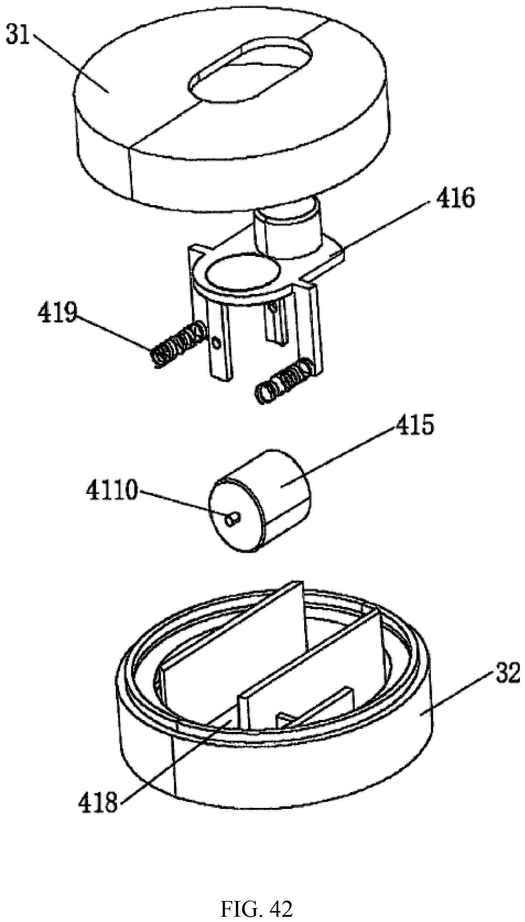

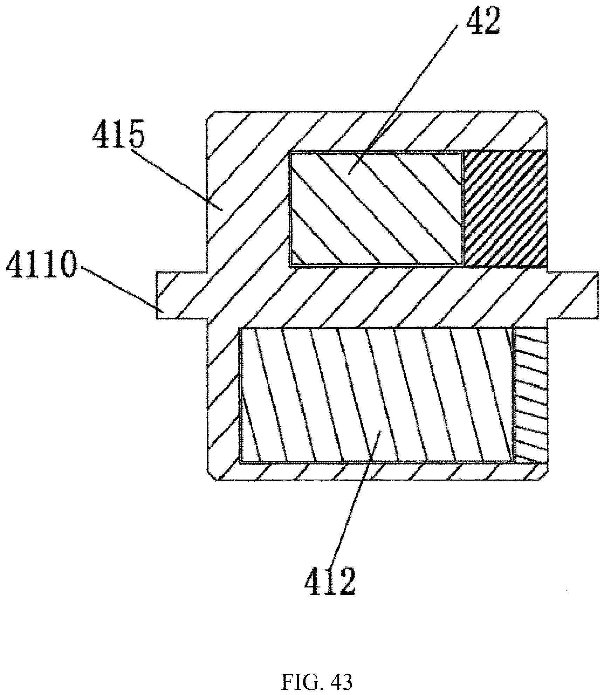

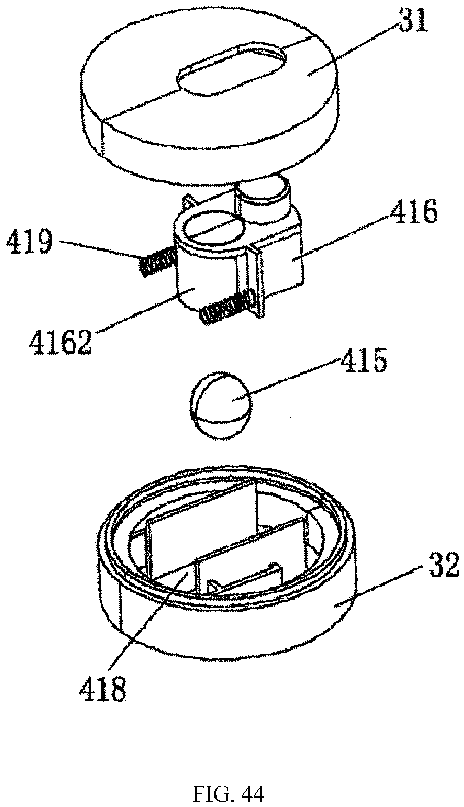

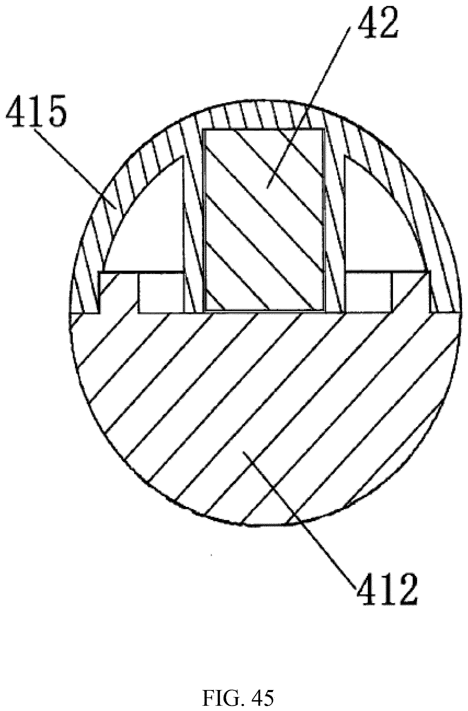

Referring to FIG. 18, FIGS. 20-23, and FIGS. 38-45, specifically in the technical solution of the present embodiment, the stressed block 41 is a sliding structure, the stressed block 41 includes a push button shell 415, a sliding frame 416 and a counter weight 412. The separation magnet 42 and the counter weight 412 are arranged in the push button shell 415 respectively at the upper end and the lower end thereof. After the separation magnet 42 and the counter weight 412 are installed in the push button shell 415, the end of the push button shell 415 with the separation magnet 42 is lighter than the end thereof with the counter weight 412, so that the center of gravity of the push button shell 415 is closer to the end with the counter weight 412. The push button shell 415 will face upward with the end with the separation magnet 42 and face downward with the end with the counter weight 412 only due to its own gravity. If the end of the push button shell 415 with the separation magnet 42 is marked with a symbol representing "brewing", while the end with the counter weight 412 is marked with a symbol representing "attracted", then the push button shell 415 will face upward with the end with the separation magnet 42 only due to its own gravity, which means that the symbol representing "brewing" will also face upward, namely the tea strainer is in a brewing state at this time. The push button shell 415 is rotatably mounted on the sliding frame 416. The lower lid 32 is radially symmetrically configured with chutes 417 configured for accommodating the sliding frame 416. A separation groove 418 configured for the push button shell 415 to slide is defined between the chutes 417. It should be noted that the upper end and the lower end of the push button shell 415 are respectively provided with the separation magnet 42 and the counter weight 412. The push button shell 415 is rotatably installed on the sliding frame 416. The sliding frame 416 has a corresponding structure of a hemispherical cover to cover the push button shell. When the hemispherical cover of the sliding frame 416 is made of a transparent material, the state of the push button shell 415 and the symbols representing "brewing" and "attracted" at the two ends of the push button shell 415 can be observed through the transparent cover. When a force is applied to the sliding frame 416, the sliding frame 416 is forced to generate a radial thrust, so that the sliding frame 416 moves in the chutes 417. At this time, the push button shell 415 also moves with the sliding frame 416, so that the separation magnet 42 inside the button housing 415 is away from the magnetically attractive metal block 21 across the bottom of the cup lid 3. The attraction force of the separation magnet 42 to the magnetically attractive metal block 21 decreases gradually. When the attraction force is less than the gravity of the tea strainer 2, the tea strainer 2 is detached from the cup lid 3 and falls into the cup body 1, it is started to brew tea. When the tea strainer 2 falls off and the tea is brewed, the separation magnet 42 is no longer attracted by the magnetically attractive metal block 21, the push button shell 415 is only subjected to its own gravity at this time. In this case, the push button shell 415 will keep facing upwards with the end with the separation magnet 42 and facing downward with the end with the counter weight 412. At this time, if the end with the separation magnet 42 is marked with a symbole representing "brewing", this symbol will also face upward, which means that the tea strainer is in the brewing state at this time. When it is necessary to stop brewing tea, the cup body 1 is turned over. At this time, the cup lid 3 is also in an inverted state. The push button shell 415 rotates around the sliding frame 416 due to gravity. The end of the push button shell 415 with the separation magnet 42 is lighter than the end thereof with the counter weight 412, so that the center of gravity of the push button shell 415 is closer to the end with the counter weight 412. The push button shell 415 will keep facing upward with the end with the separation magnet 42 and facing downward with the end with the counter weight 412 only due to its own gravity. At this time, the separation magnet 42 remains in an upward state and waits for the tea strainer 2 to fall to the bottom of the cup lid 3 to be attracted to the magnetically attractive metal block 21 in the tea strainer 2. When the tea strainer 2 is close to the bottom of the cup lid 3, is attracted by the separation magnet 42, and then the cup body 1 is returned to the straight position, the tea strainer 2 is kept in the attracted state, thereby realizing the separation of the tea strainer 2 from the tea water. In this circumstance, the end of the push button shell 415 with the separation magnet 42 remains on the bottom as it is attracted by the magnetically attractive metal block 21, and the end with the counter weight 412 is above. At this time, in the case that the end with the counter weight 412 is marked with the symbol representing "attracted", this symbol will also on the top, which shows that the tea strainer 2 is in the attracted state and is separted from the tea water at this time.

Specifically, in the technical solution of the present embodiment, a separation spring 419 is arranged in the chute 417, one end of the separation spring 419 is connected to one end of the sliding frame 416 in the sliding direction, the other end of the separation spring 419 is connected to the inner wall of the lower lid 32. While a force is applied to the push button shell 415, the separation spring 419 is compressed to generate a reset elastic force to the sliding frame 416. When the tea strainer 2 and the cup lid 3 are separated, the separation spring 419 stretches and is elastically restored, so that the sliding frame 416 slides back to its original position.

Specifically, in the technical solution of the present embodiment, a push button 4161 is provided on the top of the sliding frame 416, an opening facing outward is defined at the center of the upper lid 31, the upper end of the push button 4161 passes through the opening 315. It should be noted that, when a force is applied to the push button 4161, under the restriction of the opening 315, the push button 4161 is forced to generate a radial thrust to move the sliding frame 416.

Embodiment 9:

The structure of the push button shell 415 in embodiment 9 is improved based on embodiment 8. The difference therebetween is as follows.

Specifically in the technical solution of the present embodiment, the sidewall of the push button shell 415 is symmetrically provided with rotary shafts for push button 4110, and the push button shell 415 is rotatably mounted on the sliding frame 416 through the rotary shafts for push button 4110.

Embodiment 10:

The structure of the push button shell 415 in embodiment 10 is improved based on embodiment 9. The difference therebetween is as follows.

Referring to FIG. 17, FIG. 19 and FIG. 37, specifically in the technical solution of the present embodiment, the push button shell 415 is a sphere. The push button shell 415 includes an upper push button shell 4151, an intermediate push button shell 4152 and a lower push button shell 4153, the upper push button shell 4151 covers the intermediate push button shell 4152, and the lower push button shell 4153 is scarfed in the intermediate push button shell 4152 through snap-fit. The counter weight 412 is mounted on the top of the intermediate push button shell 4152, while the separation magnet 42 is mounted inside the lower push button shell 4153. The lower lid 32 is recessed downward to form a separation groove 418 configured for the push button shell 415 to slide. The counter weight 412 is heavier than the separation magnet 42. It should be noted that, when it is necessary to stop brewing tea, the cup body 1 may be turned over, at this time, the cup lid 3 is also in an inverted state. Since the push button shell 415 is a sphere, the push button shell 415 is rotated through the rotary shaft for push button 4110 on the sliding frame 416 due to gravity. The counter weight 412 is heavier than the separation magnet 42. The end of the push button shell 415 with the counter weight 412 faces downward and the end of the push button shell 415 with the separation magnet 42 faces upward. At this time, the tea strainer 2 is close to the bottom of the cup lid 3 and is attracted by the separation magnet 42. After the cup body 1 is returned to the straight position, the tea strainer 2 still remains in an attracted state, so as to realize the separation of the tea strainer 2 from the tea water.

Embodiment 11:

The structure of the push button shell 415 in embodiment 11 is improved based on embodiment 9. The difference therebetween is as follows.

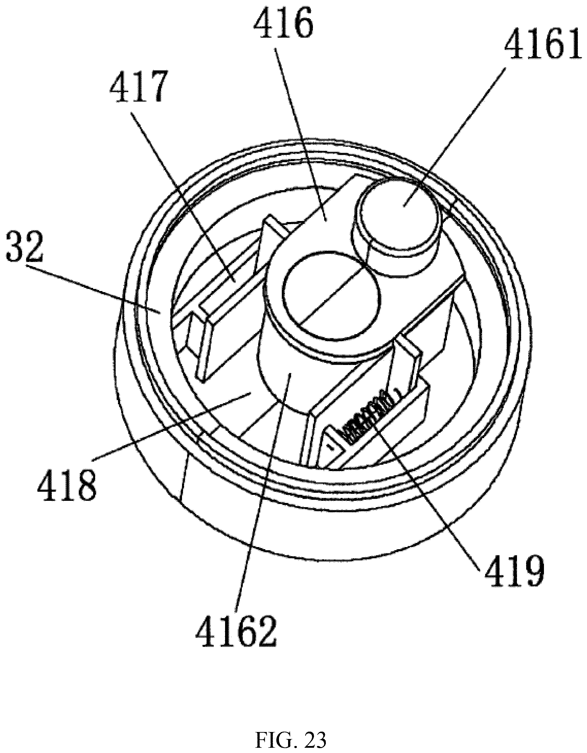

Referring to FIG. 23, FIG. 44 and FIG. 45, in this embodiment, the sidewall of the push button shell 415 is not symmetrically provided with rotary shafts for push button 4110. Therefore, the sliding frame 416 is configured with a cylindrical accommodation space 4162 for the rotation of the push button shell 415. Specifically in the technical solution of the present embodiment, the push button shell 415 is a sphere, the separation magnet 42 is arranged in the push button shell 415 at the upper end thereof, the counter weight 412 is arranged in the push button shell 415 at the lower end thereof, the counter weight 412 is heavier than the separation magnet 42. Since the push button shell 415 is a sphere, the push button shell 415 can freely rotate in the cylindrical accommodation space 4162. Since the counter weight 412 is heavier than the separation magnet 42, the end of the push button shell 415 with the counter weight 412 faces downward while the end of the push button shell 415 with the separation magnet 42 faces upward due to the gravity of the push button shell 415. At this time, the tea strainer 2 is close to the bottom of the cup lid 3 and is attracted by the separation magnet 42. After the cup body 1 is returned to the straight position, the tea strainer 2 still remains in the attracted state, so as to realize the separation of the tea strainer 2 from the tea water.

Embodiment 12:

The structure of the push button shell 415 in embodiment 12 is improved based on embodiment 9. The difference therebetween is as follows.

Referring to FIG. 20, FIG. 38 and FIG. 39, specifically in the technical solution of the present embodiment, the push button shell 415 is a square cylinder, the push button shell 415 is rotatably installed on the sliding frame 416 in the axial direction of the square cylinder, the push button shell 415 is hollow. The separation magnet 42 is arranged in the push button shell 415 at the upper end thereof while the counter weight 412 is arranged in the push button shell 415 at the lower end thereof, and the counter weight 412 is heavier than the separation magnet 42.

Embodiment 13:

The structure of the push button shell 415 in embodiment 13 is improved based on embodiment 9. The difference therebetween is as follows.

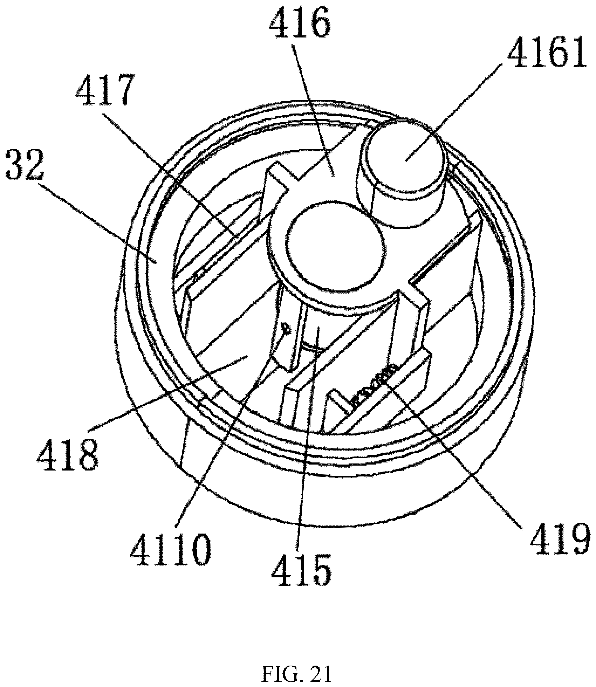

Referring to FIG. 21, FIG. 40 and FIG. 41, specifically in the technical solution of the present embodiment, the push button shell 415 is a circle cylinder, the push button shell 415 is rotatably installed on the sliding frame 416 in the radial direction of the circle cylinder, the separation magnet 42 is arranged in the push button shell 415 at the upper end thereof while the counter weight 412 is arranged in the push button shell 415 at the lower end thereof, the counter weight 412 is heavier than the separation magnet 42. It should be illustrated that the top of the sliding frame 416 is provided with a transparent window 4163. The outer wall of the push button shell 415 at the end with the counter weight is provided with the symbol representing "attracted" while the outer wall of the push button shell 415 at the end with the separation magnet is provided with the symbol representing "separated". It should be illustrated that it is convenient for the user to identify whether the tea strainer 2 and the cup lid 3 are in the attracted or separated state with the help of the transparent window 4163, the symbol representing "attracted" and the symbol representing "separated", when an opaque cup body 1 is adopted, which improves the usage performance of the product.

Embodiment 14:

The structure of the push button shell 415 in embodiment 14 is improved based on embodiment 9. The difference therebetween is as follows.

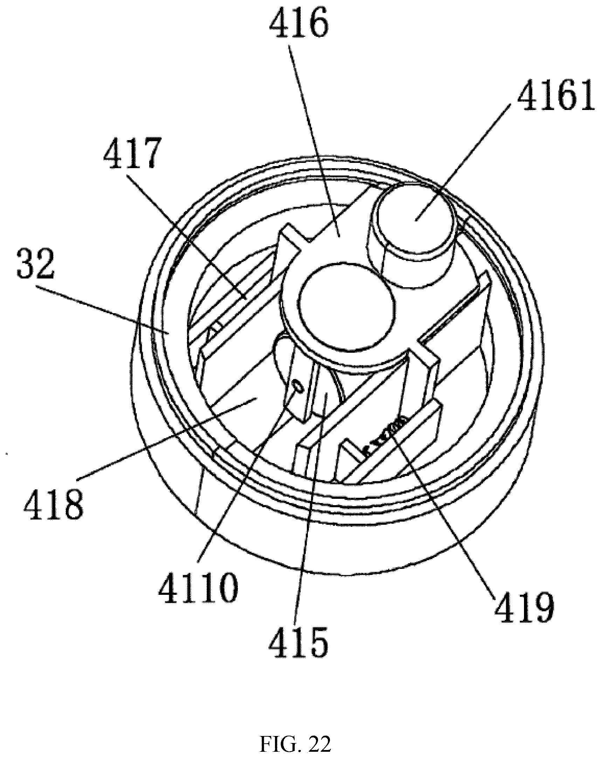

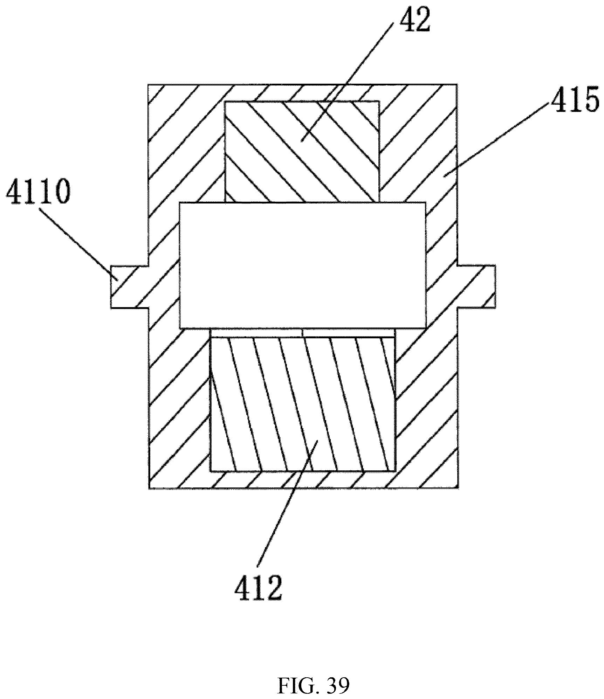

Referring to FIG. 22, FIG. 42 and FIG. 43, specifically in the technical solution of the present embodiment, the push button shell 415 is a circle cylinder, the push button shell 415 is rotatably installed on the sliding frame 416 in the axial direction of the circle cylinder, the separation magnet 42 is arranged in the push button shell 415 at the upper end thereof while the counter weight 412 is arranged in the push button shell 415 at the lower end thereof, the counter weight 412 is heavier than the separation magnet 42. It should be noted that referring to FIG. 39, FIG. 41, FIG. 43 and FIG. 45, the internal structure of the rotary knob shell 413 can be configured to be consistent with the internal structure of the push button shell 415. The internal structures can also be designed with other shapes, the internal structures of the rotary knob shell 413 and the push button shell 415 are here not defined.

Embodiment 15:

In embodiment 15, the structure of the lower lid 32 is improved, which is different from the above embodiment as follows.

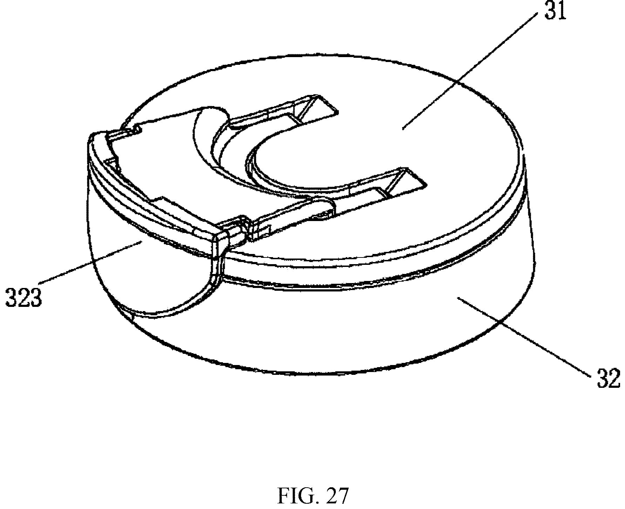

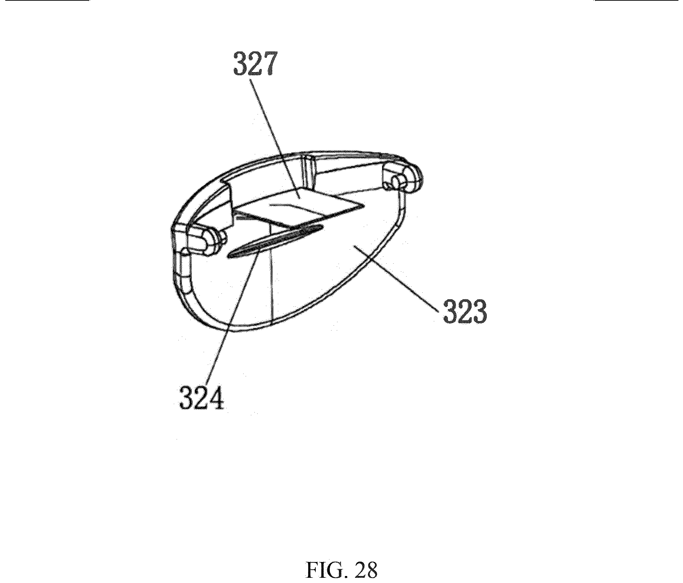

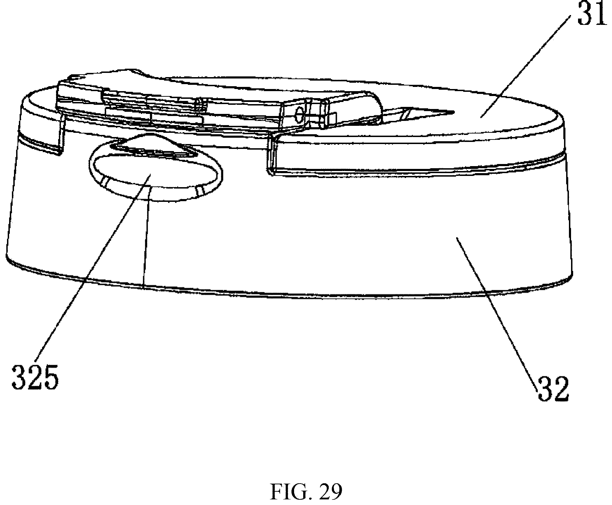

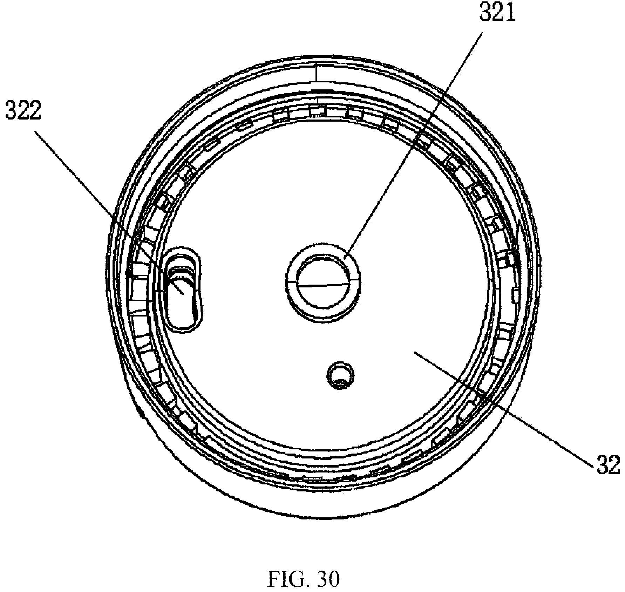

Referring to FIGS. 27-30, in particular in the technical solution of the present embodiment, the lower lid 32 is configured with a water outlet 322, and the lower lid 31 is assembled with a flap cover 323 that can be opened upwards. The inner wall of the flap cover 323 is provided with a snap protrusion for flap cover 324, and the sidewall of the lower lid 32 is provided with a slot for flap cover 325. The flap cover 323 covers the lower lid 32 with the top lid 31 by the snap-connection between the slot for flap cover 325 and the snap protrusion for flap cover 324. The bottom of the flap cover 323 is provided with a sealing plug 326 configured to seal the water outlet 322. It should be illustrated that, it is convenient for the user to drink tea or water by providing the water outlet 322, such that it is not necessary to unscrew the cup lid 3 for drinking, which improves the usage performance of the product. Further, by providing the flap cover 323 and the sealing plug 326 for convenience to seal the water outlet 322, it can be ensured that the tea water will not leak out from the water outlet 322, which contributes to use convenience and reliability. When drinking tea, the flap cover 323 can be opened upwards; and when there is no need to drink tea, the flap cover 323 can be moved downward for capping, which is convenient, practical and hygienic.

Specially, in the technical solution of the present embodiment, an elastic piece of flap cover 327 is internally arranged in the flap cover. It should be illustrated that, the elastic piece of flap cover 327 is configured for convenience to open the flap cover 323 upwards, the usage performance of the product is further improved.

Embodiment 16:

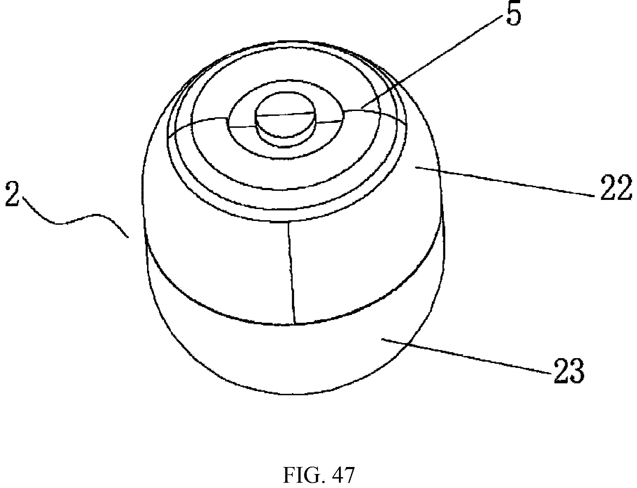

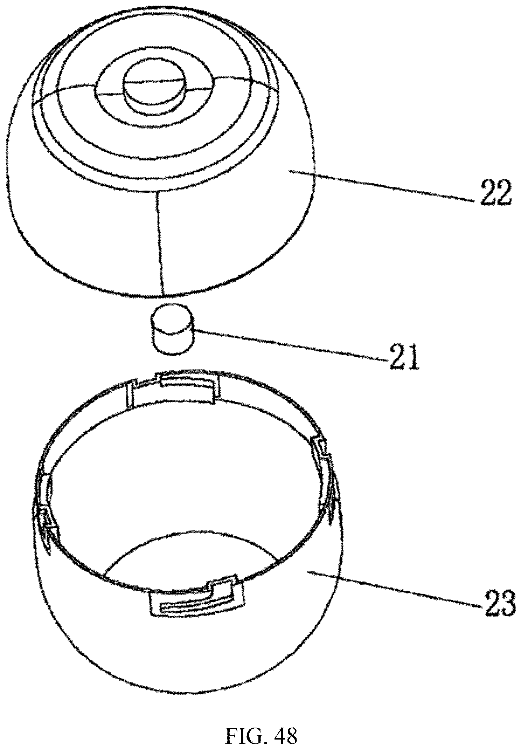

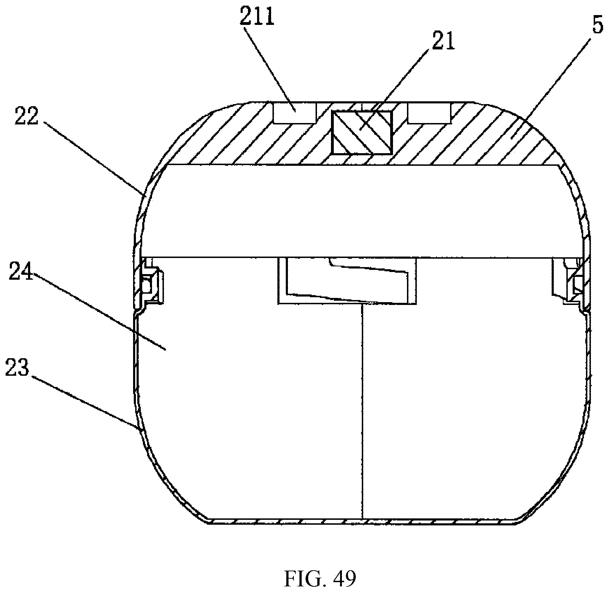

Referring to FIGS. 47-49, the present embodiment is different from embodiment 1 as follows. In the present embodiment, the tea strainer 2 includes a tea strainer cap 22 and a lower strainer body 23 that is hollow and is open upward. The tea strainer cap 22 covers the lower strainer body 23 to form an accommodating chamber 24 configured to accommodate tea leaves. The top of the tea strainer cap 22 is integrally formed with a magnetic attraction device 5; the inside of the magnetic attraction device 5 is provided with a magnetically attractive metal block 21. After the tea strainer cap 22 covers the lower strainer body 23, the center of gravity of the tea strainer 2 is biased to the side with the tea strainer cap 22.

In this embodiment, the tea strainer cap 22 and the lower strainer body 23 cover each other, such that the tea leaves can be placed in the accommodating chamber 24 in use, so that it has a good sealing storage effect with certain interest, which is obviously different from the existing tea strainer. A mutually covering structure is used, so as to be easily opened and closed, so that tea leaves can be easily put in and taken out. The tea strainer 2 is attracted to and separated from the cup lid 3 with the help of the magnetic attraction device 5 (the cup lid 3 is also provided with a corresponding magnet structure), thereby achieving the adjustment of the tea water concentration.

After the tea strainer cap 22 covers the lower strainer body 23, the tea strainer 2 is formed. And the center of gravity of the tea strainer 2 is close to the tea strainer cap 22 (which is provided with the magnetically attractive metal block). In this way, when the tea strainer 2 is separated from the cup lid 3 and falls down, the tea strainer 2 turns rapidly up and down because its center of gravity is biased to the side with the tea strainer cap 22, such that the tea strainer cap 22 with the magnetically attractive metal block 21 is below, while the lower strainer body 23 is above. During falling down, the side with the tea strainer cap 22 remains facing downward till the tea strainer 2 falls down to the bottom of the cup, which contributes to a full brewing of tea leaves in the tea strainer 2. When the brewing is finished and the cup body 1 is inverted to separate the tea from the water, the tea strainer 2 turns rapidly up and down because its center of gravity is biased to the side with the tea strainer cap 22, such that the tea strainer cap 22 with the magnetically attractive metal block 21 is below, while the lower strainer body 23 is above. Also, the side with the tea strainer cap 22 remains facing downward during falling down till the tea strainer 2 falls down to the cup lid 3 and is attracted to it, which contributes to the attraction between the tea strainer and the cup lid 3, thereby completing the separation action between the tea and the water.

The tea strainer cap 22 is heavier than the lower strainer body 23. It should be illustrated, when the cup body 1 is inverted so as to make the tea strainer 2 fall down freely in the water, the tea strainer cap 22 will flip and remains facing downward all along because the mass of the tea strainer cap 22 is greater that the mass of the lower strainer body 23, so as to attract the cup lid 3 more quickly and accurately.

Embodiment 17:

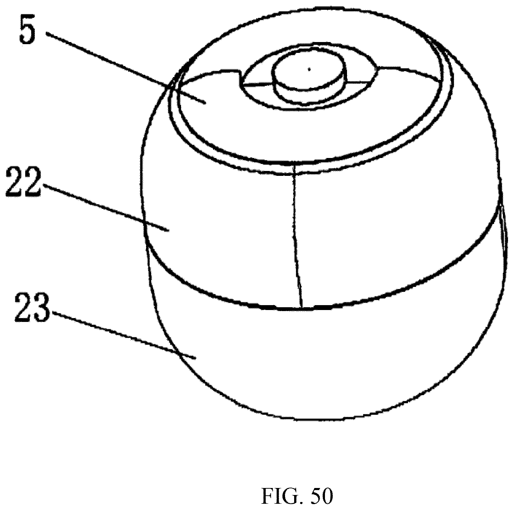

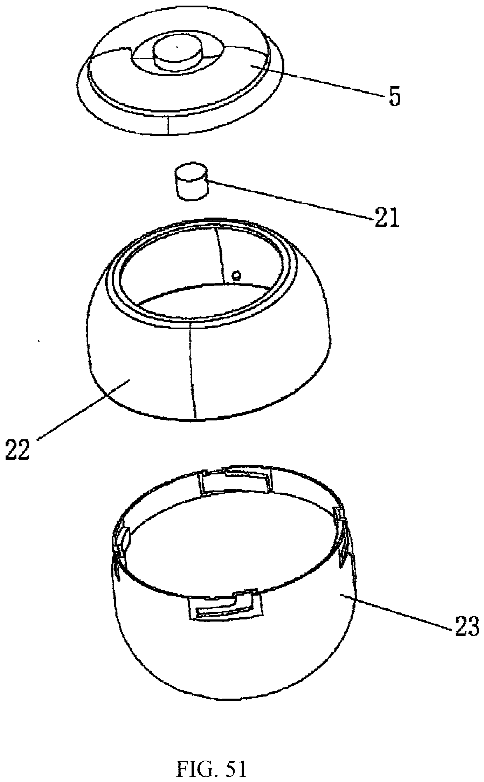

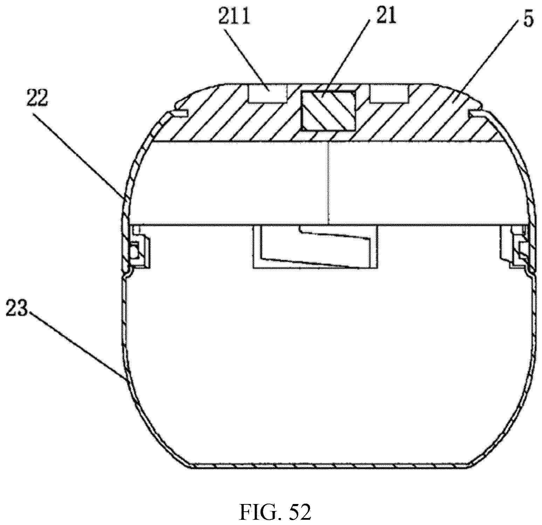

As shown in FIGS. 50-52, the difference from Embodiment 16 is that in this embodiment, a magnetic attraction device 5 is detachably installed on the top of the tea strainer cap 22. The magnetic attraction device 5 is installed on the tea strainer cap 22 in form of snap-fit or encapsulation. The magnetic attraction device 5 is an integrally formed structure.

The magnetically attractive metal block 21 is hermetically arranged inside the magnetic attraction device 5 directly by encapsulation. The outer surface on the top of the tea strainer cap 22 is configured with an annular positioning groove 211 configured to be matched with the cup lid 3 through snap-fit for positioning. An annular positioning convex ring 321 matched with the annular positioning groove 211 is provided on the tea lid of the tea cup with magnetic attraction effect, such that the effects of attraction and positioning can be achieved.

Embodiment 18:

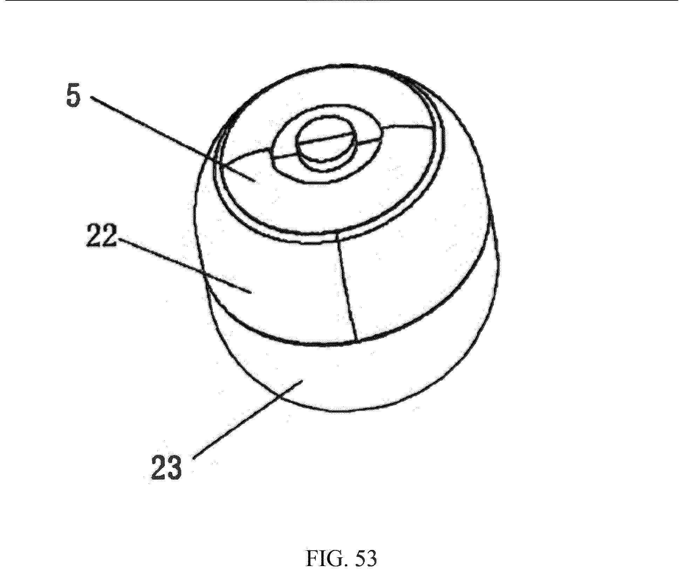

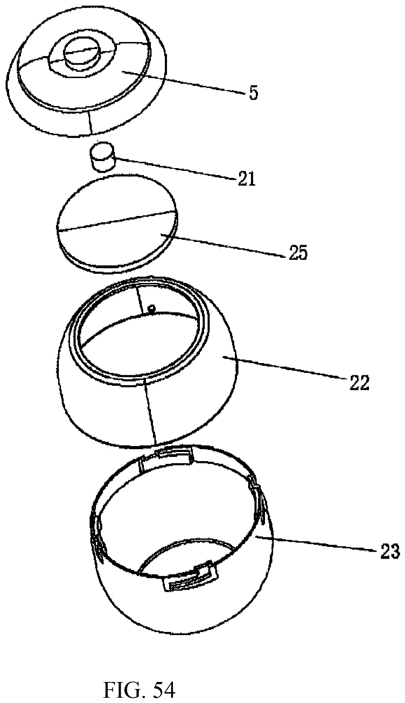

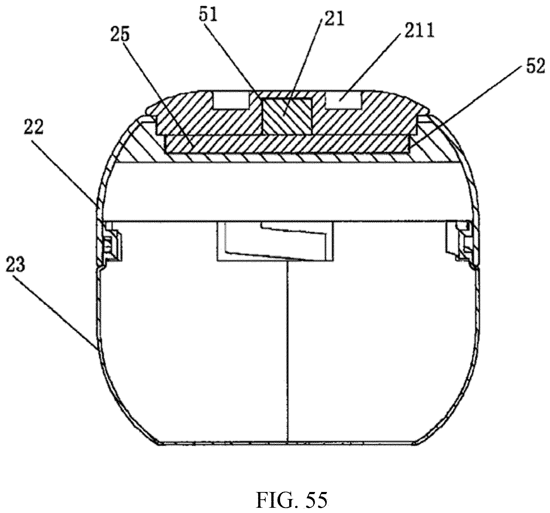

Referring to FIGS. 53-55, the difference from Embodiment 17 is that in this embodiment, a first accommodating chamber 51 and a second accommodating chamber 52 are respectively configured in the magnetic attraction device 5 from top to bottom, the first accommodating chamber 51 is configured to accommodate the magnetically attractive metal block 21, and a counter weight of tea strainer 25 is accommodated in the second accommodating chamber 52. The counter weight of tea strainer 25 is additionally provided, to bias the center of gravity of the tea strainer 2 toward the tea strainer cap 22. In this way, when the tea strainer 2 is separated from the cup lid 3 and falls down, the tea strainer 2 turns rapidly up and down because its center of gravity is biased to the side with the tea strainer cap 22, such that the tea strainer cap 22 with the magnetically attractive metal block 21 is below, while the lower strainer body 23 is above. During falling down, the side with the tea strainer cap 22 remains facing downward till the tea strainer falls down to the bottom of the cup, which contributes to a full brewing of tea leaves in the tea strainer 2. At the same time, the counter weight of tea strainer 25 is provided, to facilitate the tea strainer 2 to overcome the buoyancy of water, such that it can rapidly sink.

Embodiment 19:

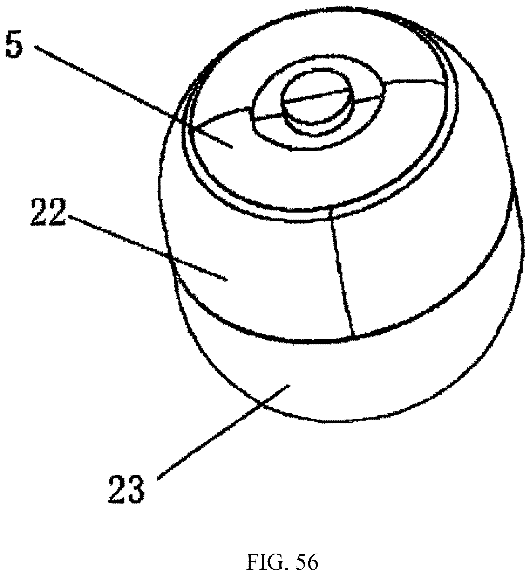

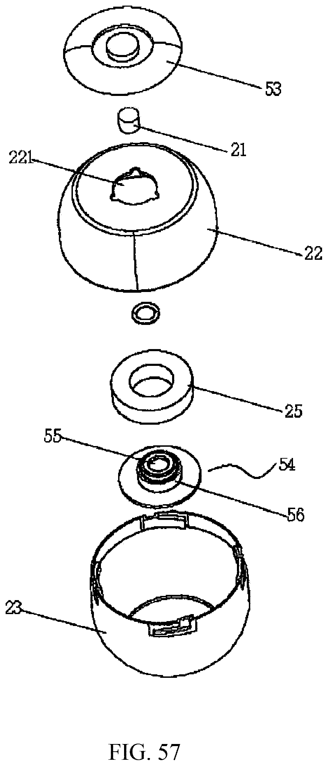

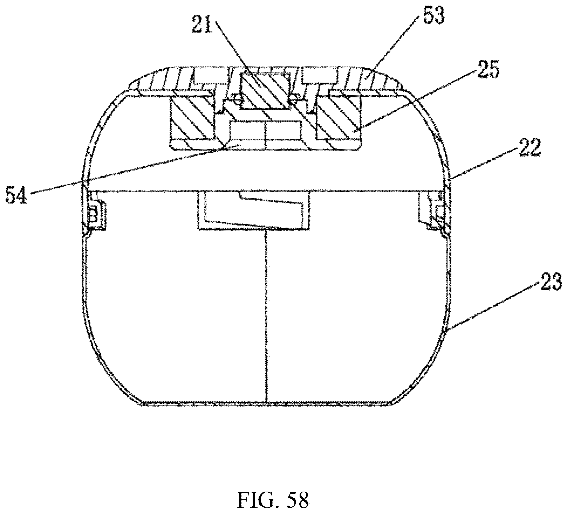

Referring to FIGS. 56-58, the difference from Embodiment 18 is that in this embodiment, the magnetic attraction device 5 mainly includes an upper magnetic snap 53 and a lower magnetic snap 54, a top of the tea strainer cap 22 is configured with an assembling through hole 221 configured for the upper magnetic snap 53 to pass through. After the upper magnetic snap 53 passes through the assembling through hole 221, it is engaged with the lower magnetic snap 54 in an up-and-down orientation while being fixed on the top of the tea strainer cap 22 in a snap-fit manner. The upper magnetic snap 53 is engaged with the lower magnetic snap 54 in the up-and-down orientation to internally form a magnet mounting part 55 for accommodating the magnetically attractive metal block 21, and to form an annular counter weight mounting part 56 on the outer wall, and a counter weight of tea strainer 25 is correspondingly configured in an annular shape. The upper magnet snap 53 and the lower magnet snap 54 are connected and fixed by the way that is not limited to ultrasonic waves. When assembling, the magnetically attractive metal block 21 is firstly placed in the magnet mounting part 55, then the counter weight of tea strainer 25 is placed in the counter weight mounting part 56. The upper magnetic snap 53 is connected to the lower magnetic snap 54 by ultrasonic connection, so as to form the magnetic attraction device 5 as a whole.

Embodiment 20:

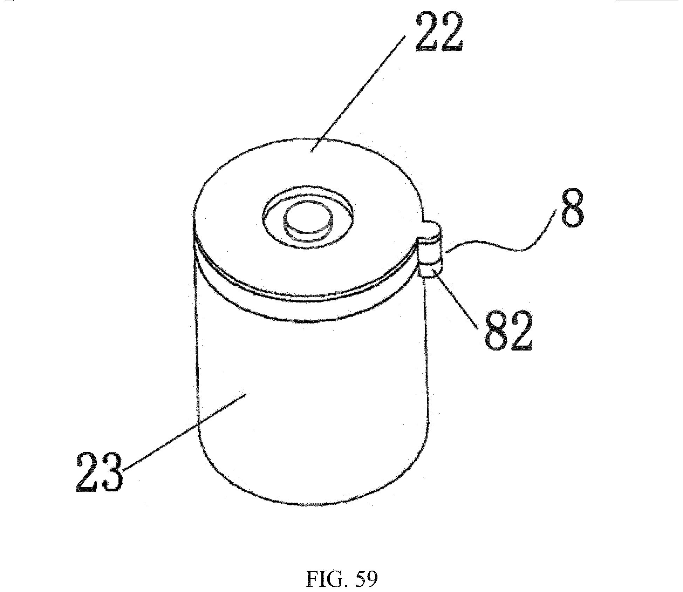

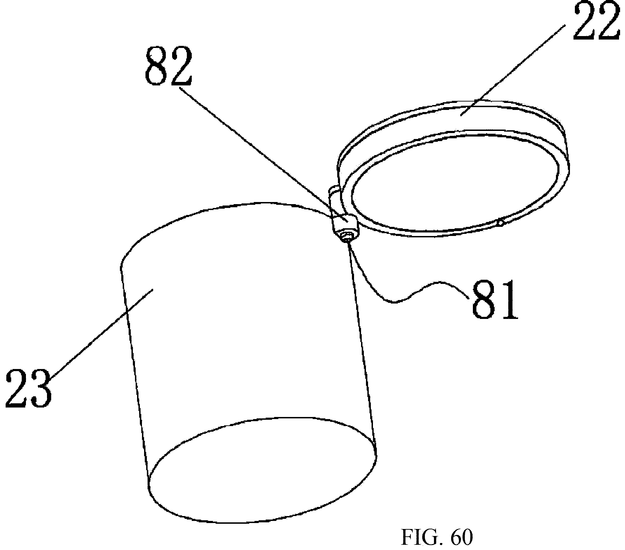

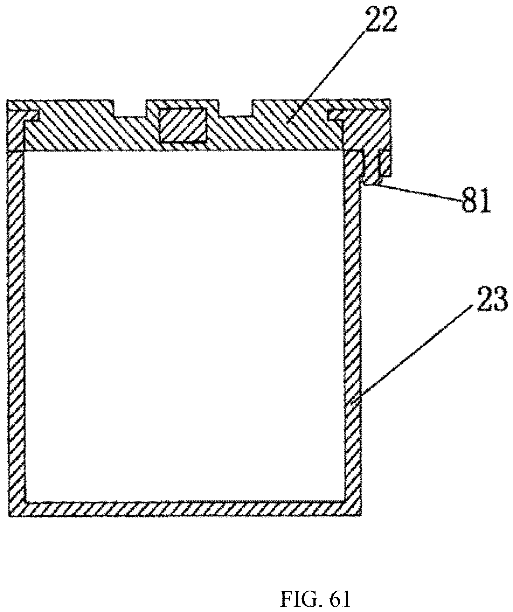

Referring to FIGS. 59-61, the present embodiment is different from embodiment 16 as follows. In the present embodiment, the tea strainer cap 22 covers the lower strainer body 23 through a rotary assembly 8, the rotary assembly 8 includes a rotary shaft 81 and a mounting part for rotary shaft 82. The rotary shaft 81 is rotatably mounted in the mounting part for rotary shaft 82, the rotary shaft 81 is arranged at the edge of the bottom of the tea strainer 2 along the axial direction of the lower strainer body 23. The mounting part for rotary shaft 82 is positioned on the outer wall of the lower strainer body 23 along the axial direction of the lower strainer body 23 in a protruding manner. The tea strainer cap 22 can rotate inward to cover the lower strainer body 23 by interworking of the rotary shaft 81 and the mounting part for rotary shaft 82 with each other.

Embodiment 21:

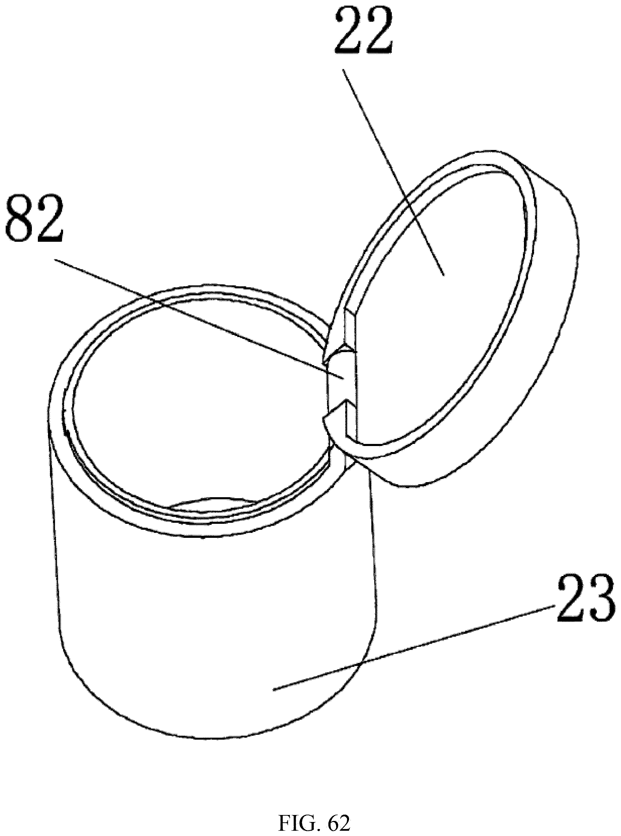

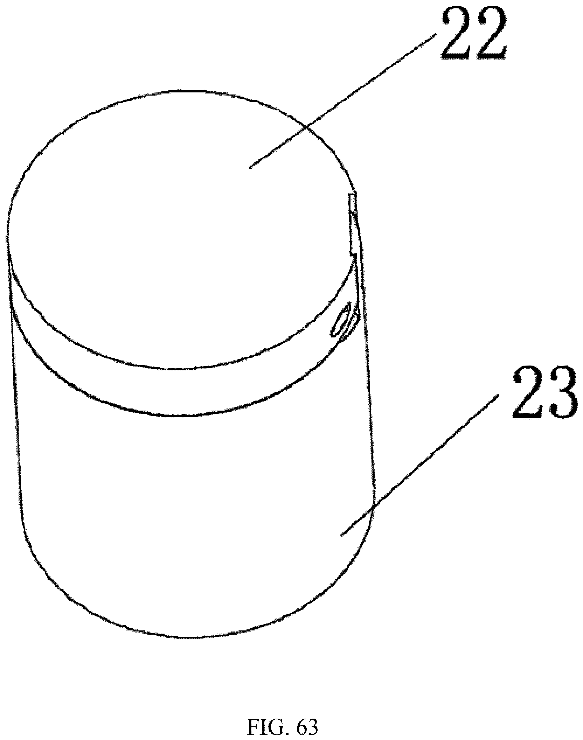

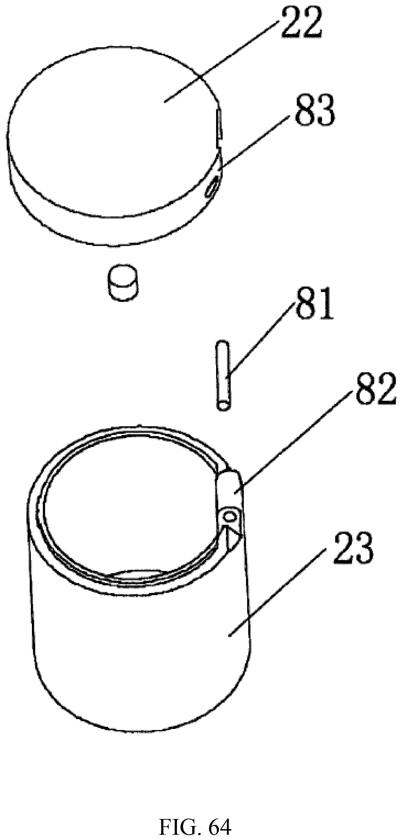

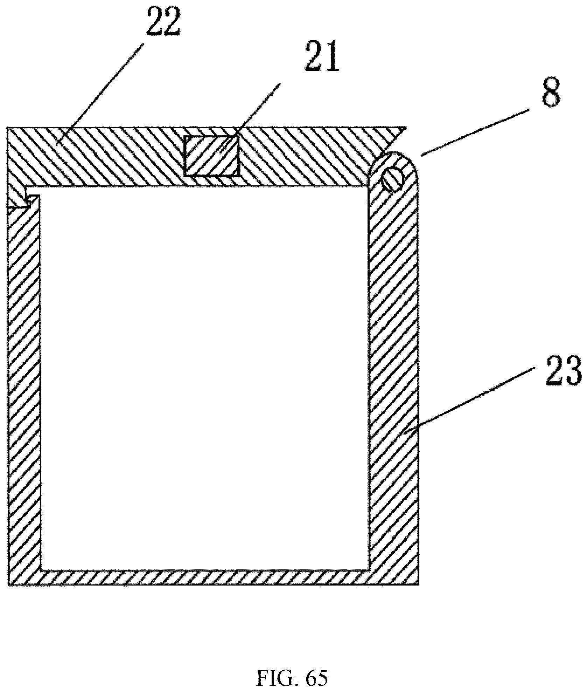

Referring to FIGS. 62-65, the present embodiment differs from embodiment 20 in that in this embodiment, the outer wall of the rotary shaft 81 is provided with a connection part for rotary shaft 83, the mounting part for rotary shaft 82 protrudes from the outer wall of the lower strainer body 23 in the radial direction of the lower strainer body 23, the rotary shaft 81 passes through the connection part for rotary shaft 83 and the mounting part for rotary shaft 82 in the radial direction of the lower strainer body 23. The tea strainer cap 22 can rotate downwards to cover the lower strainer body 23 through the cooperation of the rotary shaft 81 and the mounting part for rotary shaft 82.

Specifically, the present disclosure is further described below.

1. When the tea strainer is nonspherical (circle cylindrical, cubic, etc.), in the case that the tea strainer is required to be able to flip freely in the cup liner, the biggest length of the entire tea strainer (generally the diagonal or diagonal length) must be smaller than the inner diameter of the cup liner, that is, the following formula must be followed: The biggest length of the tea strainer - the diameter of the cup liner < 0.

For example: when the tea strainer is a circle cylinder with a diameter of 40 mm and a height of 50 mm, the biggest length of the entire circle cylinder is its diagonal length: 64.03 mm, then the diameter of the cup liner that can be used with this tea strainer must be greater than 64.03 mm.

Similarly, if a cup liner of a water cup with a diameter of 64.03 mm is used, the biggest length of the entire tea strainer must be less than 64.03 mm.

According to this formula, the smaller the difference between the biggest length of the tea strainer and the diameter of the cup liner, the smoother the tea strainer flips.

2. When the tea strainer is a regular geometry, the tea strainer is divided into a tea strainer cap and a lower strainer body, a magnetically attractive metal block is arranged in the tea strainer cap, and the tea strainer can flip freely in the cup liner. If the tea strainer is required to always keep facing downward with the end with the tea strainer cap when it flips and falls, then the center of gravity of the entire tea strainer is required to be close to the tea strainer cap. When the midpoint of the connecting line between the center point of the top surface of the tea strainer cap and the center point of the top surface of the lower strainer body is picked, and a cross-section perpendicular to the connecting line is taken through the midpoint, the cross-section divides the tea strainer into two parts. In this matter, assuming that the mass of the two parts is

A gram (one side with the tea strainer cap) and B gram (one side with the lower strainer body) respectively, the ratio of A to B follows the following formula:

$$A/B>1$$

In this formula, the greater the ratio of A to B, the greater the offset distance of the center of gravity of the tea strainer to the side with the tea strainer cap is, the more rapid and obvious the overall flipping effect of the tea strainer is when it falls in the water, and the more stable the state that the side with the tea strainer cap keeps facing downward when it falls is.

3. When the tea strainer is attracted to the magnetic cup lid, in the case that the tea strainer is required to fall smoothly after the magnetic separation mechanism of the cup lid is activated, the weight of the tea strainer must be greater than various attraction forces between the tea strainer and the cup lid, such as atmosphere pressure, intermolecular attraction, water tension, etc. At this time, the ratio of the tea strainer mass to the contact area between the tea strainer and the cup lid must exceed a value. The formula is as follows:

the mass of the entire tea strainer (g) / the contact area between the tea strainer and the cup lid (mm$^2$) $\geq$0.7

For example:

When the mass of the entire tea strainer is 37g, the contact area between the tea strainer and the cup lid is less than 37/0.7, that is, less than 52.8mm$^2$.

In this formula, the greater the ratio of the tea strainer mass to the contact area between the tea strainer and the cup lid, the smoother the tea strainer is separated and falls down.

4. In a magnetic attraction separation device, when the tea strainer is separated from the cup lid, the attraction force between the magnet in the cup lid and the magnet in the tea strainer is weakened because they are far away from each other, and in turn the tea strainer falls under its own gravity. If the tea strainer falls smoothly, the distance between the magnetic separation device in the cup lid during separation movement is $\geq$5mm. The greater the movement distance, the better the falling effect is.

5. In order to ensure that the tea strainer can be stably attracted to the cup lid, the overall net mass of the tea strainer is determined as 20 to 90g.

6. In order to ensure that the tea strainer can be stably attracted to the cup lid, the Gaussian value of the magnet in the tea strainer is ^2500Gs,

At the same time, the Gaussian value of the magnet in the corresponding cup lid is ^2500Gs, the larger the Gaussian values of the upper and lower magnets, the better the attraction effect is, and the more stable the attraction of the tea strainer is.

7. In order to ensure that the tea strainer can be stably attracted to the cup lid, the distance between the magnet internally arranged in the tea strainer and the magnet internally arranged in the cup lid should not exceed 15mm in the attracted state. The smaller the distance, the better the attraction effect is, and the more stable the attraction of the tea strainer is.

8. When the tea strainer is nonspherical, the diagonal length of the tea strainer is greater than the diameter of the cup liner. If the tea strainer shall not flip over in the water cup, the greatest length of the tea strainer must be greater than the diameter of the cup liner, that is, the following conditions must be met: the greatest length of the tea strainer (generally it refers to the greatest diagonal length) is greater than the diameter of the cup liner when the tea strainer is nonspherical (a circle cylinder with the height greater than the diameter, a cuboid, an ellipsoid, or shaped in a long strip as a whole).

Usage

When brewing tea, the tea strainer cap 22 of the tea strainer 2 is opened, sucht that tea leaves can be put in the accommodating chamber 24, then the tea strainer cap 22 is closed, and the tea strainer 2 is placed in the cup body 1. Then hot water is poured into the cup body 1, the cup lid 3 is tightened, and it is started to brew tea. At this time, the end of the stressed block 41 in the cup lid 3 with the separation magnet 42 is lighter than the end with the counter weight 412, so that the center of gravity of the stressed block 41 as a whole is close to the end with the counter weight 412. The end of the stressed block 41 with the counter weight 412 is below and the end of the stressed block 41 with the separation magnet 42 is above due to the gravity of the stressed block 41. If the end of the stressed block 41 with the separation magnet 42 is marked with the symbol representing "brewing", and the symbole representing "brewing" is also above, which shows that the tea strainer 2 is in the brewing state at this moment.

When the concentration of tea water meets the taste requirement and it is not necessary to brew the tea leaves, the cup body 1 is turned over and in turn the cup lid 3 is also in an inverted state at this time. In the cup lid 3, the first end of the stressed block 41 with the separation magnet 42 is lighter than the second end of the stressed block 41 with the counter weight, so that the center of gravity of whole stressed block 42 as a whole is biased to its second end with the counter weight 412. Under the gravity of the stressed block itself, the second end of the stressed block 41 with the counter weight 412 is below, and the first end of the stressed block 41 with the separation magnet 42 is above. At this time, the separation magnetic 42 remains on the top and waits to attract the magnetically attractive metal block 21 in the tea strainer 2 when the tea strainer 2 falls down to the bottom of the cup lid 3. The tea strainer 2 is close to the cup lid 3 under gravity, the tea strainer 2 is attracted to the bottom of the cup lid 3 through the attraction between the separation magnet 42 an the magnetically attractive metal block 21 with each other. After the cup body 1 returns back to the upright position, the separation of the tea leaves in the tea strainer 2 and the water in the cup is implemented, brewing tea is stopped. In this circumstance, the first end of the stressed block 41 with the separation magnet 42 remains on the bottom as it is attracted by the magnetically attractive metal block 21, and the second end with the counter weight 412 is above. At this time, in the case that the second end with the counter weight 412 is marked with the sign representing "attracted", the sign will also on the top, which shows that the tea strainer 2 is in the attracted and separated state at this time.

When it is necessary to brew tea again, the separation magnet 42 rises due to the counter weight 412, or the push button is radially pushed to slide the stressed block 41, or the stressed block 41 is rolled to rotate the stressed block 41. As the relative position of the stressed block 41 is changed, so that the separation magnet 42 moves away from the magnetically attractive metal block 21, or the stressed block 41 is rolled, such that the magnetic poles of the separation magnet 42 turn over relative to the magnetically attractive metal block 21, the attraction force to the magnetically attractive metal block 21 from the separation magnet 42 is decreased, when it is less that the gravity of the tea strainer 2, the tea strainer 2 falls down to the bottom of the cup body 1 under gravity, brewing tea is continued. At this time, the stressed block 41 provided with a sliding frame 416 is reset to the attracted position (initial working position) of the separation magnet 42 and the magnetically attractive metal block 21 because of the extension of the separation spring 419. When it is not necessary to brew tea, the separation magnet 42 attracts the magnetically attractive metal block 21 to attract to the bottom of the cup lid 3. Therefore, adjustment of the tea water concentration is achieved.

The principle that the magnet attracts magnetically attractive metal block 21 or iron block is adopted. By providing the separation mechanism for tea strainer 4 on the cup lid 3, the cup lid 3 can attract or release the tea strainer 2. When brewing tea, the counter weight 412 is pressed to raise the separation magnet 42, or the push button is radially pushed to slide or roll the stressed block 41, so that the stressed block 41 rotates, so as to make the separation magnet 42 move away from the magnetically attractive metal block 21. The attraction force to the magnetically attractive metal block 21 from the separation magnet 42 is decreased, when it is lower than the gravity of the tea strainer 2, the tea strainer 2 falls down to the bottom of the cup body 1 under gravity, and it is started to brew tea. When it is necessary to stop brewing tea, the cup body 1 is turned over, the tea strainer 2 moves to the cup lid 3 due to the gravity, the separation magnet 42 attracts the magnetically attractive metal block 21, such that the tea strainer 2 is attracted to the bottom of the cup lid 3, and the tea strainer 2 is separated from the tea water, thereby achieving the adjustment of tea concentration. At the same time, the function for showing the brewing and attracted states of the tea strainer through the cup lid is achieved by means of the design of the ununiform mass distribution at two ends of the stressed block (the first end with the separation magnet is light and the second end with the counter weight is heavy) in combination with the logos or color blocks at the two ends of the stressed block representing the "brewing" and "attracted" state. The technical solution of the present application has a simple structure, is convenient to use, has good stability, by which the tea concentration can be adjusted and the brewing and attracted states of the tea strainer can be reflected by the cup lid, which solves the problem that tea concentration cannot be adjusted in the existing technology and that the brewing and attracted states of the tea strainer cannot be reflected when the cup lid is used with the opaque cup body. The technical solution of the present applicaiton can be widely used in other devices by which the concentration is required to be adjusted, and has good market promotion value.

The implementation provided by the embodiments of the present invention have been introduced in detail above. In the present discloure specific examples are used to explain the principle and implementation of the embodiments of the present disclosure. The description of the above embodiments is only applicable to help understand the principle of the embodiments of the present disclosure. At the same time, for those of ordinary skill in the art, there will be changes in the specific implementation and application scope according to the embodiments of the present disclosure. In summary, the content of this description should not be understood as the limitation of the present disclosure.

**Claims**

1. A magnetic device, comprising a cup body, a tea strainer, and a cup lid sealedly connected to the cup body, the tea strainer is placed inside the cup body when in use, **characterized in that** the cup lid is provided with a separation mechanism for tea strainer, the separation mechanism for tea strainer comprises a stressed block and a separation magnet mounted on the stressed block, the stressed block is configured to change a relative position between the separation magnet and the cup lid when being stressed, wherein the tea strainer is internally provided with a sealed magnetically attractive metal block at a center, the tea strainer is attracted to a center of a bottom of the cup lid in such a way, that the magnetically attractive metal block is attracted by the separation magnet, the stressed block is stressed when brewing tea, such that the separation magnet is away from the magnetically attractive metal block, after an attraction force to the magnetically attractive metal block by the separation magnet is reduced to be smaller than a gravity of the tea strainer, such that the tea strainer falls to a bottom of the cup body under the gravity, it is started to brew the tea, wherein the cup body is turned over when it is necessary to stop brewing the tea, such that the tea strainer moves to the bottom of the cup lid under the gravity, the stressed block makes the separation magnet move to the bottom of the cup lid due to the gravity, and the tea strainer is attracted to the bottom of the cup lid because the separation magnet attracts the magnetically attractive metal block, so as to separate the tea strainer from the tea water.

2. The magnetic device according to claim 1, **characterized in that** the stressed block has a regular geometry with uneven mass distribution, an end of the stressed block with the separation magnet is lighter than an end of the stressed block without the separation magnet, such that a center of gravity of the stressed block as a whole is close to the end with a counter weight, due to the gravity, the end of the stressed block without the separation magnet is below while the end of the stressed block with the separation magnet is above, or an external force is applied to the stressed block, so that the relative position between the separation magnet and the cup lid is changed by the stressed block.

3. The magnetic device according to claim 1, **characterized in that** the stressed block is configured to have a lever structure, wherein the cup lid comprises an upper lid and a lower lid, the upper lid fixedly covers the lower lid, a support pillar is provided between the upper lid and the lower lid, wherein the stressed block comprises a rotary shaft and a counter weight, the rotary shaft is rotatably mounted on the support pillar, the separation magnet is mounted on one end of the rotary shaft while the counter weight is mounted on the other end of the rotary shaft, the counter weight is heavier than the separation magnet, the upper lid is configured with a through hole, and the counter weight protrudes out of the through hole.

4. The magnetic device according to claim 1, **characterized in that** the stressed block is configured to have a rotary structure, the stressed block comprises a rotary knob shell and a counter weight, the separation magnet and the counter weight are arranged inside the rotary knob shell respectively at an upper end and a lower end of the rotary knob shell, the counter weight is heavier than the separation magnet, so that a center of gravity of the rotary knob shell as a whole is close to the end of the rotary knob shell with the counter weight, wherein the cup lid is configured with a cavity configured to accommodate the rotary knob shell, the rotary knob shell is rotatably mounted in the cavity, the cavity is configured with a circular opening or a rectangular opening extending outwards, and the upper end of the rotary knob shell protrudes from the circular opening or the rectangular opening.

5. The magnetic device according to claim 1, **characterized in that** the stressed block is configured to have a slidable structure, the stressed block comprises a push button shell, a sliding frame and a counter weight, the separation magnet and the counter weight are arranged in the push button shell respectively at an uppert end and a lower end of the push button shell, the counter weight is heavier than the separation magnet, so that a center of gravity of the push button shell as a whole is close to the end of the push button shell with the counter weight, the push button shell is rotatably mounted on the sliding frame, the lower lid is radially symmetrically provided with chutes for accommodating the sliding frame, and a separation groove configured for the push button shell to slide is defined between the chutes.

6. The magnetic device according to claim 4, **characterized in that** a sidewall of the rotary knob shell is symmetrically provided with rotary shafts for rotary knob, and the rotary knob shell is rotatably installed in the cavity through the rotary shafts for rotary knob.

7. The magnetic device according to claim 5, **characterized in that** a sidewall of the push button shell is symmetrically provided with rotary shafts for push button, the push button shell is rotatably mounted on the sliding frame through the rotary shafts for push button.

8. The magnetic device according to claim 4, **characterized in that** the rotary knob shell is a sphere, the counter weight and the separation magnet are respectively installed on the upper end and the lower end of the rotary knob shell, and the counter weight is heavier than the separation magnet.

9. The magnetic device according to claim 4, **characterized in that** the rotary knob shell is a sphere, the rotary knob shell comprises an upper rotary knob shell and a lower rotary knob shell, the lower rotary knob shell is scarfed in the upper rotary knob shell, the counter weight is installed on a top of the upper rotary knob shell, the separation magnet is installed inside the lower rotary knob shell, and the counter weight is heavier than the separation magnet.

10. The magnetic device according to claim 4, **characterized in that** the rotary knob shell is a square cylinder, the rotary knob shell is rotatably installed in the cavity in an axial direction of the square cylinder, wherein the rotary knob shell is hollow, the separation magnet is arranged in the rotary knob shell at an upper end of the rotary knob shell, the counter weight is arranged in the rotary knob shell at a lower end of the rotary knob shell, and the counter weight is heavier than the separation magnet.

11. The magnetic device according to claim 4, **characterized in that** the rotary knob shell is a circle cylinder, the rotary knob shell is rotatably installed in the cavity in a radial direction of the circle cylinder, the separation magnet is arranged in the rotary knob shell at an upper end of the rotary knob shell, the counter weight is arranged in the rotary knob shell at a lower end of the rotary knob shell, and the counter weight is heavier than the separation magnet.

12. The magnetic device according to claim 4, **characterized in that** the rotary knob shell is a circle cylinder, the rotary knob shell is rotatably installed in the cavity in an axial direction of the circle cylinder, the separation magnet is arranged in the rotrary knob shell at an upper end of the rotary knob shell, the counter weight is arranged in the rotary knob shell at a lower end of the rotary knob shell, and the counter weight is heavier than the separation magnet.

13. The magnetic device according to claim 5, **characterized in that** the push button shell is a sphere, the push button shell comprises an upper push button shell, an intermediate push button shell and a lower push button shell, the upper push button shell is covered on the intermediate push button shell, the lower push button shell is scarfed in the intermediate push button shell, the counter weight is installed on a top of the intermediate push button shell, the separation magnet is installed inside the lower push button shell, the lower lid is recessed downward to form a separation groove configured for the push button shell to slide, and the counter weight is heavier than the separation magnet.

14. The magnetic device according to claim 5, **characterized in that** the push button shell is a sphere, the sliding frame is configured with a cylindrical accommodation space for rotation of the push button shell, the separation magnet is arranged in the push button shell at an upper end of the push button shell, the counter weight is arranged in the push button shell at a lower end of the push button shell, and the counter weight is heavier than the separation magnet.

15. The magnetic device according to claim 5, **characterized in that** the push button shell is a square cylinder, the push button shell is rotatably installed on the sliding frame in an axial direction of the square cylinder, the push button shell is hollow, the separation magnet is arranged in the push button shell at an upper end of the push button shell, the counter weight is arranged in the push button shell at a lower end of the push button shell, and the counter weight is heavier than the separation magnet.

16. The magnetic device according to claim 5, **characterized in that** the push button shell is a circle cylinder, the push button shell is rotatably installed on the sliding frame in a radial direction of the circle cylinder, the separation magnet is arranged in the push button shell at an uppper end of the push button shell, the counter weight is arranged in the push button shell at a lower end of the push button shell, and the counter weight is heavier than the separation magnet.

17. The magnetic device according to claim 5, **characterized in that** the push button shell is a circle cylinder, the push button shell is rotatably installed on the sliding frame in an axial direction of the circle cylinder, the separation magnet is arranged in the push button shell at an upper end of the push button shell, the counter weight is arranged in the push button shell at a lower end of the push button shell, and the counter weight is heavier than the separation magnet.

18. The magnetic device according to any one of claims 13 to 17, **characterized in that** a separation spring is arranged in each of the chutes, one end of the separation spring is connected to one end of the sliding frame in a sliding direction, and the other end of the separation spring is connected to an inner wall of the lower lid.

19. The magnetic device according to claim 17, **characterized in that** a push button is provided on a top of the sliding frame, an opening facing outward is defined at a center of the upper lid, an upper end of the push button passes through the opening.

20. The magnetic device according to claim 9, **characterized in that** three arc-shaped connection parts are provided on a circumference of the upper rotary knob shell at equal intervals, three slots are defined on the upper rotary knob shell at equal intervals, three cuts are provided on a circumference of the lower rotary knob shell at equal intervals, three buckles are provided on the lower rotary knob shell at equal intervals, the three arc-shaped connection parts and the cuts together form a complete hemisphere after being assembled, and the buckles are snapped in the slots.

21. The magnetic device according to any one of claims 8-12, **characterized in that** an outer wall of the rotary knob shell at the end with the counter weight is provided with text, icons or color blocks representing an attracted state of the tea strainer, the outer wall of the rotary knob shell at the end with the separation magnet is provided with text, icons or color blocks representing a separation state of the tea strainer.

22. The magnetic device according to any one of claims 11-16, **characterized in that** an outer wall of the push button shell at the end with the counter weight is provided with text, icons or color blocks representing an attracted state of the tea strainer, and the outer wall of the push button shell at the end with the separation magnet is provided with text, icons or color blocks representing a separation state of the tea strainer.

23. The magnetic device according to claim 1, **characterized in that** the lower lid is configured with a water outlet, the upper lid is assembled with a flap cover that is capable of being opened upward, a snap protrusion for flap cover is provided on an inner wall of the flap cover, a slot for flap cover is defined on a sidewall of the lower lid, the flap cover is covered on the lower lid in such a way, that the snap protrusion for flap cover is snapped in the slot, and a sealing plug configured to seal the water outlet is provided at a bottom of the flap cover.

24. The magnetic device according to claim 23, **characterized in that** an elastic piece of flap cover is provided in the flap cover.

25. The magnetic device according to claim 1, **characterized in that** the tea strainer comprises a tea strainer cap and a hollow tea strainer body configured to be opened upward, the tea strainer cap is covered on the tea strainer body to form an accommodation space for accommodating tea leaves, a top of the tea strainer cap is integrally formed with a magnetic attraction device, the magnetically attractive metal block is provided in the magnetic attraction device, and after the tea strainer cap is covered on the tea strainer body, a center of gravity of the tea strainer body is close to a side with the tea strainer cap.

26. The magnetic device according to claim 25, **characterized in that** the tea strainer cap is heavier than the tea strainer body.

27. The magnetic device according to claim 25, **characterized in that** the magnetic attraction device is detachably installed on the top of the tea strainer cap, the magnetic attraction device is installed on the tea strainer cap through snap-fit or encapsulation, the magnetic attraction device is integrally formed, and an outer surface on the top of the tea strainer cap is configured with an annular positioning groove configured to be engaged with the cup lid for positioning.

**28.** The magnetic device according to claim 25, **characterized in that** a first accommodating chamber and a second accommodating chamber are respectively defined in the magnetic attraction device from top to bottom, the first accommodating chamber is configured to accommodate the magnetically attractive metal block, and the second accommodating chamber is configured to accommodate a counter weight.

**29.** The magnetic device according to claim 25, **characterized in that** the magnetic attraction device mainly comprises an upper magnetic snap and a lower magnetic snap, the top of the tea strainer cap is configured with an assembling through hole configured for the upper magnetic snap to pass through, the upper magnetic snap is engaged with the lower magnetic snap in an up-and-down orientation and is fixed on the top of the tea strainer cap in a snap-fit manner at the same time after the upper magnetic snap passes through the assembling through hole, wherein the upper magnetic snap is engaged with the lower magnetic snap in the up-and-down orientation to internally form a magnet mounting part for accommodating the magnetically attractive metal block and to form an annular counter weight mounting part on an outer wall, and the counter weight is correspondingly configured in an annular shape.

**30.** The magnetic device according to claim 25, **characterized in that** the tea strainer cap is covered on the tea strainer body through a rotary assembly.

**31.** The magnetic device according to claim 30, **characterized in that** the rotary assembly comprises a rotary shaft and a mounting part for rotary shaft, and the rotary shaft is rotatably installed in the mounting part for rotary shaft.

**32.** The magnetic device according to claim 31, **characterized in that** the rotary shaft is arranged on an edge of a bottom of the tea strainer cap in an axial direction of the tea strainer body, the mounting part for rotary shaft protrudes from an outer wall of the tea strainer body in the axial direction of the tea strainer body, and the tea strainer cap is rotatable inwards to cover the tea strainer body through a fit of the rotary shaft and the mounting part for rotary shaft.

**33.** The magnetic device according to claim 31, **characterized in that** an outer wall of the tea strainer cap is provided with a connection part for rotary shaft, the mounting part for rotary shaft protrudes from an outer wall of the tea strainer body in a radial direction of the tea strainer body, the rotary shaft passes through the tea strainer body and mounting part for rotary shaft in the radial direction of the tea strainer body, and the tea strainer cap is rotatable downwards to cover the tea strainer body through a fit of the rotary shaft and the mounting part for rotary shaft.

**34.** The magnetic device according to claim 1, **characterized in that** a diagonal length of the tea strainer - a diameter of a cup liner < 0.

**35.** The magnetic device according to claim 1, **characterized in that** a mass of the tea strainer as a whole / a contact area between the tea strainer and the cup lid $\geq 0.7$.

**36.** The magnetic device according to claim 1, **characterized in that** an offset distance of the separation mechanism for tea strainer $\geq 5mm$.

**37.** The magnetic device according to claim 1, **characterized in that** a net mass of the tea strainer as a whole is 20g-90g.

**38.** The magnetic device according to claim 1, **characterized in that** a Gaussian value of the magnetically attractive metal block arranged in the tea strainer is $\geq 2500Gs$, a Gaussian value of the separation magnet is $\geq 2500Gs$.

**39.** The magnetic device according to claim 1, **characterized in that** in an attracted state, a distance between the magnetically attractive metal block arranged in the tea strainer and the separation magnet arranged in the cup lid is no more than 15 mm.

**40.** The magnetic device according to claim 1, **characterized in that** a diagonal length of the tea strainer - a diameter of a cup liner <0.

**41.** The magnetic device according to claim 1, **characterized in that** when the tea strainer is nonspherical, a diagonal length of the tea strainer is greater than a diameter of the cup liner.

FIG. 1

FIG. 2

FIG. 3

FIG. 4

311

31

32

FIG. 5

42

32

412

411

33

FIG. 6

FIG. 7

FIG. 8

FIG. 9

FIG. 10

413

35

31

32

FIG. 11

413      32

414

FIG. 12

35      413

31

32

FIG. 13

FIG. 14

413

31

32

FIG. 15

FIG. 16

415

31

32

FIG. 17

FIG. 18

FIG. 19

416

4161

32

415

418

4110 417 419

FIG. 20

FIG. 21

416

4161

417

32

418

4110

415

419

FIG. 22

416

4161

417

32

418

419

4162

FIG. 23

FIG. 24

314

31

FIG. 25

315

31

FIG. 26

FIG. 27

FIG. 28

FIG. 29

321

322

32

FIG. 30

412

413

414

4131

4132

FIG. 31

4135

4131

4133

414

FIG. 32

4136

4134

4132

FIG. 33

FIG. 34

FIG. 35

22

26

FIG. 36

315

31

415

416

4110

41

417

419

418

32

FIG. 37

FIG. 38

FIG. 39

FIG. 40

FIG. 41

FIG. 42

42

415

4110

412

FIG. 43

FIG. 44

FIG. 45

FIG. 46

FIG. 47

FIG. 48

FIG. 49

FIG. 50

FIG. 51

FIG. 52

FIG. 53

FIG. 54

EP 4 397 216 A1

FIG. 55

73

5

22

23

FIG. 56

FIG. 57

FIG. 58

FIG. 59

FIG. 60

FIG. 61

FIG. 62

FIG. 63

FIG. 64

FIG. 65

## INTERNATIONAL SEARCH REPORT

| International application No. |
| --- |
| **PCT/CN2022/000110** |

**A. CLASSIFICATION OF SUBJECT MATTER**

A47G 19/22(2006.01)i

According to International Patent Classification (IPC) or to both national classification and IPC

**B. FIELDS SEARCHED**

Minimum documentation searched (classification system followed by classification symbols)

A47G

Documentation searched other than minimum documentation to the extent that such documents are included in the fields searched

Electronic data base consulted during the international search (name of data base and, where practicable, search terms used)

CNABS, VEN, CNTXT: 杯, 壶, 泡茶, 茶叶, 沏茶, 茶仓, 磁, 吸, 重力, 分离, 倒, cup, bottle, tea, container, magnet+, gravity, separate, invert, upside, down

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113598582 A (LIN YISHENG) 05 November 2021 (2021-11-05) claims 1-41, and description, paragraphs 120-220, and figures 1-65 | 1-41 |
| X | CN 210643564 U (LIN YISHENG) 02 June 2020 (2020-06-02) description, paragraphs 47-70, and figures 1-13 | 1, 2, 5, 7, 13-20, 25-41 |
| Y | CN 210643564 U (LIN YISHENG) 02 June 2020 (2020-06-02) description, paragraphs 47-70, and figures 1-13 | 3, 4, 6, 8-12, 21-24 |
| Y | CN 212815692 U (LIN YISHENG) 30 March 2021 (2021-03-30) description, paragraphs 34-48, and figures 1-14 | 3 |
| Y | CN 209574244 U (ANHUI JUNZILAN INDUSTRIAL CO., LTD.) 05 November 2019 (2019-11-05) description, paragraphs 28-43, and figures 1-10 | 4, 6, 8-12, 21-22 |
| Y | CN 212015230 U (LIN YISHENG) 27 November 2020 (2020-11-27) description, paragraph 59, and figures 8-9 | 23-24 |
| X | CN 212415389 U (LIN YISHENG) 29 January 2021 (2021-01-29) description, paragraphs 32-47, and figures 1-13 | 1, 2, 25-41 |

☑ Further documents are listed in the continuation of Box C.     ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **21 October 2022** | **31 October 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/000110**

**C.      DOCUMENTS CONSIDERED TO BE RELEVANT**

| Category* | Citation of document, with indication, where appropriate, of the relevant passages | Relevant to claim No. |
|---|---|---|
| X | CN 209219817 U (WU RUI) 09 August 2019 (2019-08-09)<br>    description, paragraphs 45-55, and figures 1-11 | 1, 2, 25-41 |
| X | CN 213696461 U (ANHUI FUGUANG LIFE TECHNOLOGY CO., LTD.) 16 July 2021<br>(2021-07-16)<br>    description, paragraphs 26-34, and figures 1-6 | 1, 2, 25-41 |
| A | CN 210249410 U (LIN YISHENG) 07 April 2020 (2020-04-07)<br>    entire document | 1-41 |

Form PCT/ISA/210 (second sheet) (January 2015)

INTERNATIONAL SEARCH REPORT
Information on patent family members

International application No.

**PCT/CN2022/000110**

| Patent document cited in search report | | | Publication date (day/month/year) | Patent family member(s) | | | Publication date (day/month/year) |
|---|---|---|---|---|---|---|---|
| CN | 113598582 | A | 05 November 2021 | CN | 216221070 | U | 08 April 2022 |
| CN | 210643564 | U | 02 June 2020 | None | | | |
| CN | 212815692 | U | 30 March 2021 | None | | | |
| CN | 209574244 | U | 05 November 2019 | None | | | |
| CN | 212015230 | U | 27 November 2020 | None | | | |
| CN | 212415389 | U | 29 January 2021 | None | | | |
| CN | 209219817 | U | 09 August 2019 | CN | 108742034 | A | 06 November 2018 |
| CN | 213696461 | U | 16 July 2021 | CN | 112493806 | A | 16 March 2021 |
| CN | 210249410 | U | 07 April 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 204698258 U